# EUROPEAN PATENT SPECIFICATION

(11) **EP 2 374 746 B1**
(45) Date of publication and mention of the grant of the patent: **19.06.2013**
(21) Application number: 11002904.8
(22) Date of filing: 07.04.2011
(51) Int. Cl.: B65H 67/08, B21C 47/18, B21C 1/32, B21C 47/34, G01N 21/89

(54) **Detection method and system of at least one final end of a winding**
Erfassungsverfahren und Erfassungssystem für mindestens ein Ende einer Wicklung
Procédé et appareil de détection d'au moins une extrémité d'un renvideur

(30) Priority: 08.04.2010 IT UD20100065
(43) Date of publication of application: 12.10.2011
(73) Proprietor: OCN S.p.A., 33010 Tavagnacco (UD) (IT)
(72) Inventor: Tellini, Maurizio, 33010 Tavagnacco (UD) (IT)
(74) Representative: D'Agostini, Giovanni

(56) References cited:
- EP-A1- 2 133 838
- WO-A1-03/062744
- DE-A1- 2 946 719
- DE-A1- 19 524 674
- DE-U1- 9 319 581
- GB-A- 1 376 159
- US-B1- 6 321 139

## Description

### Technical Field

The present invention is relative to a detection method of the final end of a winding in order to introduce the same into a successive processing line according to the characteristics of the pre-characterizing part of claim 1.
The invention is also relative to a detection system (11) according to the characteristics of the pre-characterizing part of claim 11.
The invention is also relative to a detection and movement system (1) according to the characteristics of the pre-characterizing part of claim 12.

### Definitions

Through the present description use will be made of the following definitions.
Through the present description the terms "winding" and ""coil" have to be considered perfectly equivalent, said terms being referred to a bar made of a metallic material which is wound in the form of a coil having a given winding diameter, namely a given diameter of the turns constituting the winding itself.
Through the present description the term ""bar" is intended to indicate a generic metallic material product which is manufactured in the form of a product whose development in length has a size which is much greater than the size of the section of the product itself when measured on a section which is taken on an orthogonal plane with respect to the line defining its development in length. Though in the terminology which is usually used in the specific sector of the drawing a distinction is made between "bar", "wire", "rod" depending on the diameter, or, in general, on the size in section of the metallic material product, in the present description the term "bar" is intended as comprising also the products which are usually identified with the terms "wire" and "rod", namely, in general for the aim of the present description, it comprises all the products having a section with such dimensions which allow their winding in the form of coils and the successive unwinding of the coil for successive machining.
The expression "profile" of a bar is intended to mean the shape of the bar along a section of it which is an orthogonal section with respect to its development in length. Though in the figures and in the description explicit reference is made to bars having a circular profile, the expression "profile" of a bar is intended to comprise also shapes which are different shapes from the circular one, e.g. elliptic, quadrangular, hexagonal, etc. It will be evident, in the view of the following description, that the present invention is applicable to a profile corresponding to a generic section, with minimum corrections which will be obvious to a man who is skilled in the art.
Through the present description, "correlation algorithm" is intended to indicate a correlation operation which is performed on two multi-dimensional or mono-dimensional digital signals, one of which is a known reference signal and the other one is a signal which is acquired, of which one wants to determine the similarity degree with respect to the known reference signal. The similarity degree between the two signals is evaluated on the basis to the correlation index, which, in general, can assume values included between minus one and one, wherein a negative value indicates that the two signals are inversely correlated, a positive value indicates that the two signals are directly correlated, a null value indicates a correlation absence.
Through the present description initial end of the winding is intended as being the end of the winding which, in the winding process, it is the first end of the bar which is wound. Final end of the winding is intended as being the end of the winding which, in the winding process, it is the end of the bar corresponding to the conclusive phase of the winding operation. This definition will be maintained even if it's evident that the initial end referred to the winding process constitutes the final end in the unwinding process of the coil and the final end referred to the winding process constitutes the initial end in the unwinding process of the coil.

### Prior art

The material to be introduced on the processing lines, for example in the case of a drawing line, is usually supplied in the form of rectilinear bars or wound in coils. The present invention applies to the case in which the material is supplied in the form of coils. The winding is placed on proper storing stations which are equipped with one or more supports of the coils in the form of rotating "reels" on which the coil is stored to feed a successive processing line. Once the winding has been placed on the storing station, namely on the rotating reel, one needs to identify the final end of the winding in order to be able to successively grasp it and introduce it at the entry of the processing line, for example for drawing it.

In prior art, solutions are known for the introduction of the final end of a winding in a drawing processing line of the manual type in which an operator controls the rotation of the rotating support of the winding until he visually identifies the final end of the winding in order to be able to grasp it manually controlling a robot, by means of proper control means, and successively drive it until it is introduced into the processing line, for example for drawing it.

In prior art, solutions are known for the introduction of the final end of a winding in a processing line, for example for drawing it, which are based on the observation of the fact that this end, in most cases, is protruding with respect to the winding. Therefore, such solutions provide the winding to be rotated, by means of the rotating support, in the same direction according to which it has been wound until a deviation screen, with a substantially tangent development with respect to the winding and whose deviation end is very close to the winding itself, is interposed between the protruding final end and the winding, deviating the final end to drive it towards the introduction point in the processing line, for example for drawing it.

DE2946719 discloses a reeling machine for unwinding coils of wire in order to feed a subsequent forming press. The reeling machine is provided with a reel drum for holding the wire coil and a gripping device for receiving and for guiding the wire end towards transport facilities. An automatic search feature based on photocells, an automatic gripping device for the wire and a control device connected to the gripping device allow the automatic gripping device to feed the wire end towards transport facilities without assistance of an operator.

GB 1376159 discloses an apparatus for supporting a coil of rolled metal strip and orienting the coil so that the tail end of the strip on the outside of the coil occupies a predetermined position. The apparatus comprises supporting means for supporting the coil, controllable driving means for rotating about its axis a coil, and sensing means provided with rollers and including two inductively acting sensing elements. The sensing means are adapted to engage, via said rollers, the periphery of the a coil and the sensing elements are connected to circuitry arranged to obtain a respective signal which depends on the proximity of the respective sensing element to the coil of metal strip. When the signals differ in a way indicative of the respective spacing of the sensing elements from the periphery of the coil and such difference is greater than a predetermined amount, an output signal indicative of the passing of the tail end of the strip coil is generated past said sensing means, and control means arranged to receive such an output signal and to stop the controllable driving means so as to stop the coil in a predetermined position with respect to its position at the occurrence of such an output signal. A stripper is then lowered into engagement with the coil and the motor then reverses its movement direction to allow the coil to be unwound and runs for a predetermined time set by a timer.

DE 19524674 discloses a winding device having a mechanism for sideways movement of the thread, for movement of a latch element brought into contact with the peripheral side surface at the end of the reception sleeve for the thread reel. A laser sensor is used to detect the thread for indicating whether or not it is moved into the latch operating position.

DE 9319581 discloses a device for introduction of the end of a coil to be unwound into a processing machine, with an arm for pressing the outermost winding of the coil, with a second arm, and with a finger-like insertion device having two lever arms which are hinged together and separately controllable in rotation around the respective hinge to drive the end of a coil into a processing machine.

WO 03062744 discloses a laser based coordinate measuring device measuring a position of a remote target. The laser based coordinate measuring device includes a stationary portion, a rotatable portion, and at least a first optical fiber. The stationary portion has at least a first laser radiation source and at least a first optical detector, and the rotatable portion is rotatable with respect to the stationary portion. The first optical fiber system, which optically interconnects the first laser radiation source and the first optical detector with an emission end of the first optical fiber system, has the emission end disposed on the rotatable portion. The emission end emits laser radiation to the remote target and receives laser radiation reflected from the remote target with the emission direction of the laser radiation being controlled according to the rotation of the rotatable portion.

US 6321139 discloses an operation line searching method in which an operation start position is automatically approached and a robot/sensor system having such function of detecting the operation line. A robot having a laser sensor and an operation tool attached to a distal end thereof approaches an operation start position using various searching motion path patterns.

EP 2133838 discloses a recognition processing method and an image processing device ends recognition of an object within a predetermined time while maintaining the recognition accuracy. The device extracts combinations of three points defining a triangle to be used by a model of a recognition comparing object obtained triangles and respective model triangles.

### Problems of the prior art

The prior art techniques providing the use of a robot taking the end by means of the control of an operator who performs the identification operations of the final end of the winding and the control operation of the robot, are subjected to many problems. First of all the operator works in a zone which is a high risk zone, because it is close to processing line and to the storage and unwinding station of the coils. Moreover, apart from aspects in connection with safety, the identification of the final end by the operator is an operation which can even be very time expensive in the case in which the end is not considerably protruding with respect to the winding or it is even partially inserted internally to the turns of the winding itself. Also the manually controlled taking operation can cause a lengthening of the time required for this phase, because the manual control of the movement of the robot may not be easy to be done and anyway it is subject to possible errors due to the operator, e.g. the evaluation of the grasping distance from the final end of the winding. Indeed in order to ensure that the introduction of the end in the processing line is successful, the grasping of the bar by the robot must occur at a certain grasping distance with respect to the end of the winding. If this grasping distance is excessive the introduction operation in the processing line can fail because the exceeding portion with respect to the correct grasping distance could be such as to give rise to interference conditions with the introduction guide. Also in the case in which the grasping distance is lower than the necessary one, the introduction operation in the processing line can fail because the final end could exit from the introduction guide once the robot releases the bar, or the puller unit could not to be able to engage the bar to drive it towards the processing line.
The prior art techniques providing the use of a deviation screen do not perform a real identification phase of the final end of the winding and are not able to ensure its correct introduction in all conditions, as for example the conditions in which the end is not considerably protruding with respect to the winding or it is even partially inserted internally to the turns of the winding itself, or in which the end to be grasped is in correspondence with a considerable deformation of the bar. Moreover such solutions are applicable, in general, only in the case in which the storage stations are in a position in which the axis of the winding is horizontal, because the final end of the winding must get separate from the winding by gravity in order to allow the interposition of the deviation screen between the end and the winding. Moreover this system has many problems in the case of very long windings because the insertion of the deviation screen is carried out in a position in which the axis of the winding is horizontal and, in this case, sliding problems between deviation screen and winding itself can be present.

### Aim of the invention

The aim of the present invention is to provide a detection method of the position of the final end of a winding in order to introduce the same into a processing line , for example for drawing it, and which allows the automatic grasping of the end by a grasping robot also in the most unfavorable conditions in which the end is not considerably protruding with respect to the winding or it is even partially inserted internally to the turns of the winding itself.
A further aim of the present invention is to provide a detection and movement system of the position of the final end of a winding in order to introduce the same into a processing line, for example for drawing it.

### Concept of the invention

The aim is reached with the characteristics of the main claim. The dependent claims represent advantageous solutions.

### Advantageous effects of the invention

The detection method of the position of the final end of a winding according to the present invention, by means of the considerable creative contribution, the effect of which constitutes an immediate and non-negligible technical progress, presents many advantages.
First of all the identification of the position of the final end of the winding occurs also in the most unfavorable conditions in which the end-is not considerably protruding with respect to the winding or it is even partially inserted internally to the turns of the winding itself, allowing an automatic grasping of the end by the grasping robot.
In addition to the identification of the position of the final end of the winding, the method according to the present invention also allows the identification of the path of the bar portion which is located at the final end of the winding, with consequent benefits from the point of view both of the grasping operation itself which can occur in the most efficient way, and from the point of view of the introduction operation of the end in the successive processing line, allowing to avoid misaligning problems between the end of the winding and the introduction guide in the successive processing line.

### Description of the drawings

An embodiment of the invention is now described, by way of example only, with reference to the accompanying drawings in which:
Fig. 1 is a plan view of the initial part of a processing line in which a first and a second processing lines are present and in which a first and a second storage stations of the windings are present, each of which is provided with a first and a second support of the winding.
Fig. 2 is a plan view of the initial part of the processing line of figure 1 in which the winding on the first support of the first storage station of the windings is subject to a further rotation of the corresponding support of the winding.
Fig. 3 is a plan view of the initial part of the processing line of figure 2 in which the winding on the first support of the first storage station of the windings is subject to a further rotation of the corresponding support of the winding.
Fig. 4 is a plan view of the initial part of the processing line of figure 3 in which the winding on the first support of the first storage station of the windings is subject to a further rotation of the corresponding support of the winding in order to reach the grasping position.
Fig. 5 is a plan view of the initial part of the processing line of figure 4 in which the grasping phase of the end of the winding by a grasping robot is illustrated.
Fig. 6 and Fig. 7 are three-dimensional views showing the grasping phase of the end of the winding by a grasping robot.
Fig. 8 is a plan view of the initial part of the processing line of figure 7, limited to only one of the two processing lines, in which one illustrates the phase relative to the movement of the final end of the winding for its introduction in the successive and corresponding processing line.
Fig. 9 is a plan view of the initial part of the processing line of figure 10 in which one illustrates the phase relative to the introduction of the final end of the winding in the successive and corresponding processing line.
Fig. 10 and Fig. 11 are schematic side views showing the acquisition phase of images of the winding respectively in the case in which a protruding final is absent and in the case in which a protruding final is present.
Fig. 12 and Fig. 13 illustrate the phase relative to the introduction of a reference system relatively to the acquisition of images corresponding to the configuration which is illustrated in Fig. 10.
Fig. 14 and Fig. 15 illustrate the phase relative to the introduction of a reference system relatively to the acquisition of images corresponding to the configuration which is illustrated in Fig. 11.
Fig. 16 illustrates a typical acquired image of a winding which is used for successive phases relatively to the identification of the end of the winding.
Fig. 17 illustrates a reference profile of the bar to be identified in the case of circular cross section bars.
Fig. 18 illustrates the result of one of the processing phases of the acquired images, according to the detection method of the position of the final end of a winding according to the present invention.
Fig. 19 illustrates the result of a further processing phase of the acquired images, according to the detection method of the position of the final end of a winding according to the present invention.
Fig. 20 and Fig. 21 illustrate further verification phases which occurs on the results which are obtained after the processing phases of the acquired and processed images, according to the detection method of the position of the final end of a winding according to the present invention.
Fig. 22 illustrates a reference profile of the bar to be identified in the case of bars with a quadrangular section.
Fig. 23 illustrates a reference profile of the bar to be identified in the case of bars with an elliptic section.
Fig. 24 illustrates the identification phase of the paths of the bars which form the winding.
Fig. 25 is a plan view of the initial part of a processing line in which a first and a second processing lines are present and in which a first and a second storage stations of the windings are present, each of which is provided with a first and a second support of the winding and showing a possible reciprocal positioning of the different devices of the system implementing the detection method of the position of the final end of a winding according to the present invention.
Fig. 26 and Fig. 27 represent details according to side views, showing the grasping phase of an end of the winding by a grasping head of the robot in the case of a final end to be grasped which is partially close-fitting with respect to the winding.

### Description of the invention

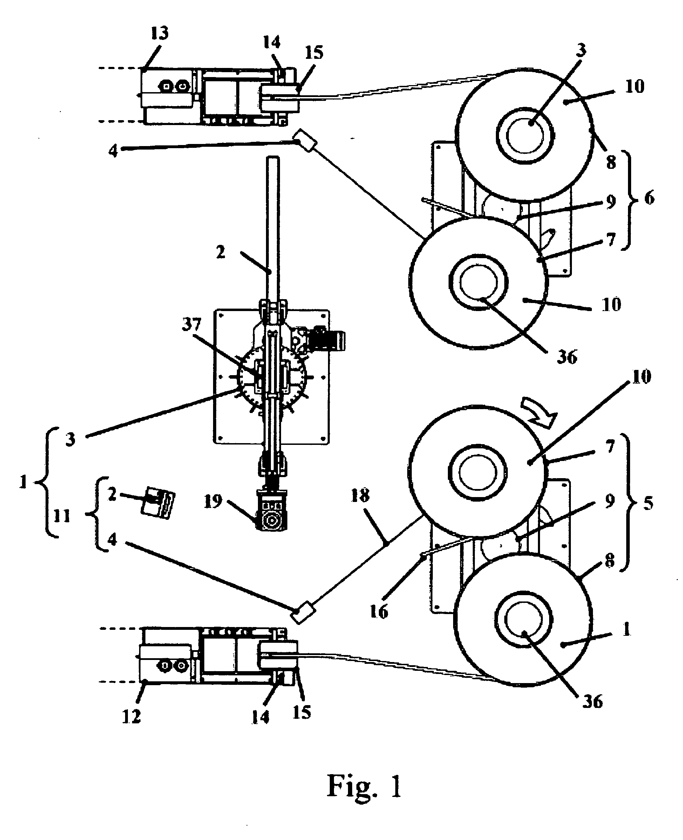

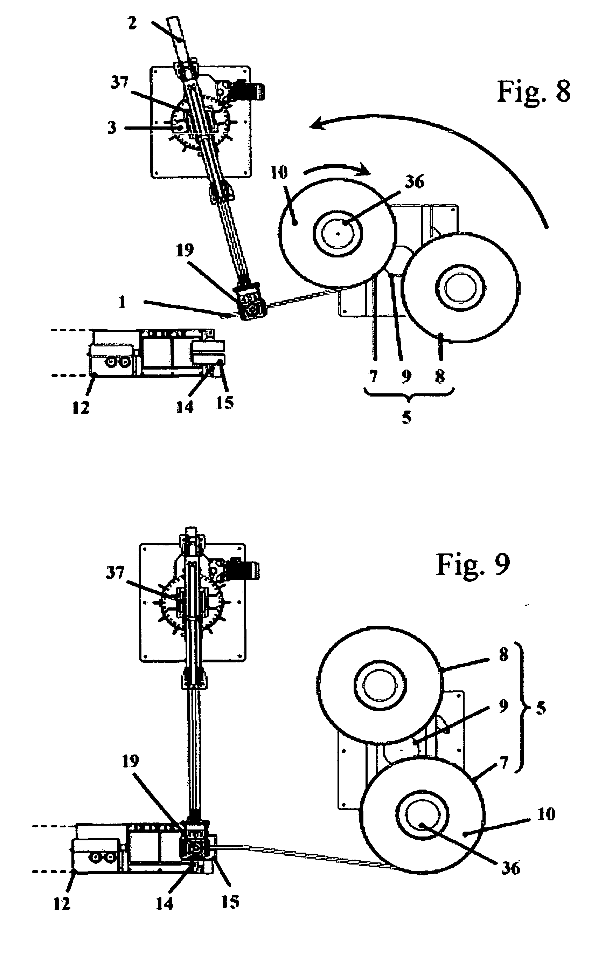

Through the present description explicit reference will be made to drawing lines, but it will be evident that the present invention is applicable in general in any case in which it is necessary to identify and to perform a grasping on a final end of a coil in order to perform an unwinding operation of the coil itself, for example in order to introduce it into a generic processing line. The material to be introduced on the drawing lines (Fig. 1) is usually supplied in the form of bars which are wound in coils (10). The winding is placed on proper storage stations (5) which are provided with one or more supports of the windings in the form of rotating reels on which the winding is inserted in order to feed a successive processing line. In the illustrated embodiment a first processing line (12) and a second processing line (13) are present, which are respectively served by a first storage station (5) of the windings and by a second storage station (6) of the windings. Each storage station (5, 6), in turn, includes a first support (7) on which a winding (10) is placed and a second support (8) on which another winding (10) is placed. It will be evident that the storage stations (5, 6) can be structured to feed the corresponding processing line (12, 13) unwinding the coil both in a clockwise or counter-clockwise direction. For convenience of representation and in order not to make excessively boring the text describing and representing all the possible solutions, in the figures (Figs. 1, 2, 3, 4, 5) for the first processing line (12) the solution corresponding to an unwinding of the coil in a clockwise direction has been represented, while for the second processing line (13) the solution corresponding to an unwinding of the coil in a counter-clockwise direction has been represented. However it will be evident that in the same plant both processing lines (12, 13) will preferably be equipped with storage stations which unwind the coil in the same counter-clockwise or clockwise direction. The representation of both solutions in the same figure has only an illustrative purpose and must be intended for a descriptive purpose in order to underline that the present invention is applicable regardless of the winding/unwinding direction. Each of the two supports (7, 8) of the windings is controllable in clockwise rotation and anticlockwise rotation according to a rotation axis which is parallel and essentially corresponding to the axis of the cylinder which approximates the winding as a whole. Indeed the winding (10) can be approximated with a cylinder and the winding is placed on the corresponding support (7, 8) so that the axis of the approximating cylinder essentially corresponds to the rotational axis of the support itself, except for positioning tolerances due to the fact that the internal diameter of the winding is greater than the external diameter of the central pin (36) of the support (7, 8) and except for eccentricities of the winding itself. The first support (7) on which the winding (10) is located and the second support (8) on which another winding (10) is located, are placed on a rotating base (9) which (Fig. 8) allows to simultaneously rotate the two supports (7, 8) in order to:
- bring the first support (7) from a first loading position (Fig. 1) of the winding to a second position (Fig. 9) in which the first support (7) feeds the corresponding processing line (12);
- bring the second support (8) from a second position (Fig. 1) in which the second support (8) feeds the corresponding processing line (12) to a first loading position (Fig. 9) of the winding.

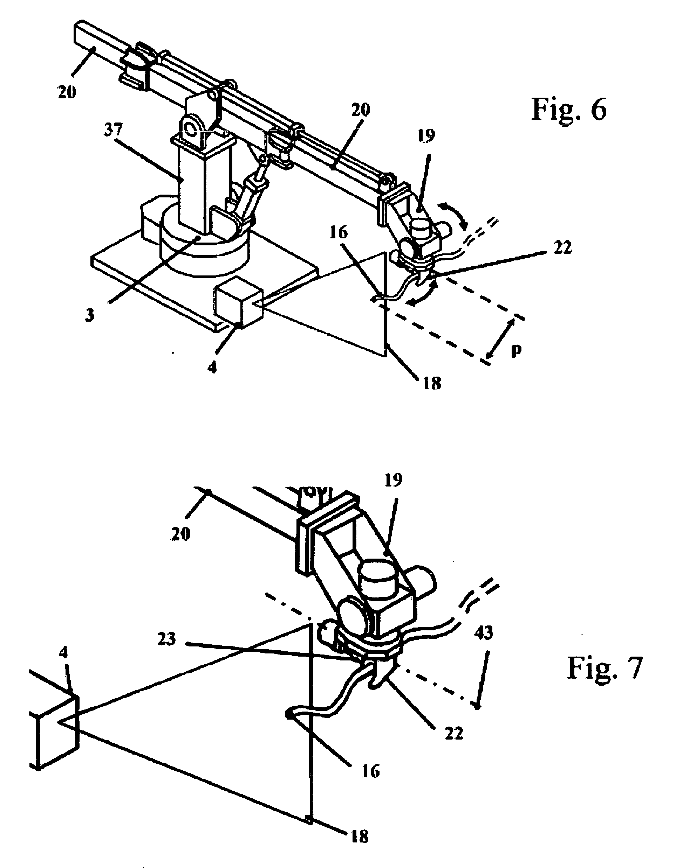

This configuration allows to always have a winding ready for the introduction in the processing line and, in the case in which a winding has just been introduced in the processing line, it allows to have at disposal a support of the winding ready to be equipped with a new corresponding winding to be processed. Though in the present description explicit reference will be made to this configuration, it will be evident that the present invention is applicable also in the case of solutions in which there is a storage station (5) of the windings which is provided with one single support of the winding. Furthermore it should be noted that while in the figures the storage stations (5) are represented with windings supports having an essentially vertical axis, it will be also evident that the present invention can be immediately applied also in the case of storage stations (5) having horizontal axis or with inclined axis. Moreover, in the illustrated embodiment, reference will be made to a configuration comprising two processing lines (12, 13), but it will be evident that the present invention is applicable also in the case of a single production line which is served by a storage station (5) of the windings which is provided with a support of the windings both of the single type or of the double type. In the illustrated embodiment (Fig. 1), a robot (3) serves two processing lines (12, 13). The robot (3), in the illustrated embodiment (Fig. 6) is provided with a movable arm (20) which can be transversely moved with respect to the body (37) of the robot itself. The robot body (37) is rotatable with respect to the fixing base to the ground. In correspondence with one of the two ends of the movable arm (20) there is a grasping head (19) which is orientatable by means of rotation with respect to the movable arm (20) which supports it. The rotation of the grasping head (19) can occur according to two reciprocally orthogonal rotational axes. The combination of the described movements allows to obtain the approaching of the grasping head (19) to the grasping zone of the final end (16) by means of rotation of the body (37) of the robot and by means of the transverse movement of the movable arm (20). Once the grasping position is reached, the combination of the movements of the grasping head (19) allows the orientation of the grasping head (19) with respect to the final end (16) of the winding on which the grasping has to be performed in order to introduce the final end in the successive processing line. The position of the robot (3) and the size of its movable arm (20) with respect to the position of each of the two groups respectively composed by:
- first processing line (12) and first storage station (5);
- second processing line (13) and second storage station (6);
are such to ensure the positioning of the grasping head (19) in correspondence with the grasping position relative to the first support (7) of the winding of each storage station (5, 6) and in correspondence with an introduction guide (15) of the final end (16) of the winding in a corresponding puller (14) of each processing line (12, 13).
It will be obvious that in place of the represented type of robot, other types of robot can be used without exiting from the domain of the present invention, as for example anthropomorphous robots.
As previously observed, once the winding has been placed on the storage station (5, 6), it is necessary to identify the final end (16) of the winding in order to be able to successively grasp it and introduce it into the entry of the processing line (12, 13).
To perform the identification of the final end (16) of the winding, at least one acquisition device (4) is used which is able to project a laser beam on the surface of the object to be scanned and to detect the profile of the object to be scanned by means of measurements performed on the projection of the laser beam.

For the aims of the present invention, acquisition devices (4) can be used both of the type which is usually known as two dimensional scanning lasers, and of the type which is usually known as triangulation laser.
Without getting the heart of the matter relative to how a scanner laser works, which for the purpose of the present invention is considered as being known, it will be sufficient to underline that a scanning laser or scanner laser is a device which is able to emit a laser impulse and to receive the corresponding signal which is reflected by the hit object. Measuring the interval of the elapsed time and, therefore, the distance between the acquisition device (4) and the detected point and the intensity of the return signal, one is able to reconstruct the surface of the scanned object, in our case, the surface of the winding (10).
Without getting the heart of the matter relative to how a triangulation laser works, which for the purpose of the present invention is considered as being known, it will be sufficient to underline that a triangulation laser is a device able to emit at least one laser blade which lights the object to be scanned, which is detected by a vision system which is located according to a certain angle with respect to the projected laser blade. By means of analysis of the image which is acquired by the vision system, one is able to reconstruct the surface of the scanned object, in our case, the surface of the winding (10).
Regardless of the type of the used acquisition device (4), in the following of the present description, unless differently indicated, acquisition device (4) is in general intended to mean a device able to generate a laser beam (18), to project it on the object to be scanned which in the our case is the surface of the winding (10), to acquire the result of the projection of the laser beam (18) on the object to be scanned and to provide a reconstruction of the surface of the scanned object as resulting from the projection of the laser beam (18) on the surface of the object itself. It will be evident that, according to the type of the used device, the laser beam (18) will be a laser blade or a series of consecutively projected laser beams along a plane of projection: in the following of the present description laser beam (18) will be intended to indifferently indicate one or the other of the solutions, the two solutions being equivalent for the aims of the present invention.
Preferably, for the aims of the present invention, an acquisition device (4) is used of the type which is usually known as two dimensions scanner laser. It will be however evident that the same results can be obtained also with other types of acquisition devices (4), as the above mentioned acquisition devices (4) of the type which is usually known as triangulation laser.

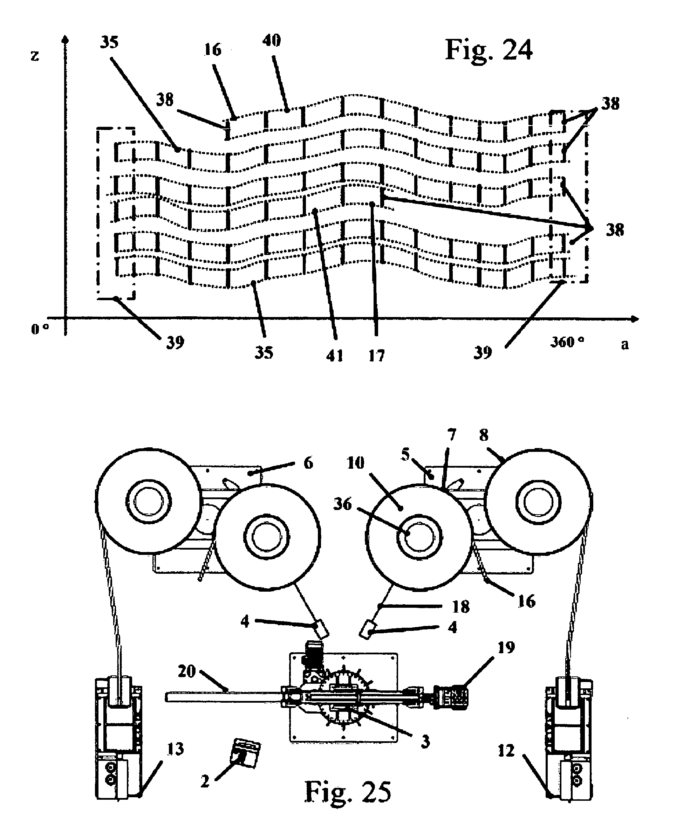

In the illustrated embodiment (Fig.1), a first acquisition device (4) is used for the first storage station (5) and a second acquisition device (4) is used for the second storage station (6). This configuration allows to position and orient in an optimal way each acquisition device (4) with respect to the respective support of the winding which bears the winding on which the scanning has to be performed. It will be however evident that, in a different embodiment, a single can be used which will be oriented depending on the fact that a scanning must be performed on a winding which is located on the first storage station (5) or on the second storage station (6). Alternatively a single acquisition device (4) can be positioned on the robot (3). This solution, though presenting advantages relatively to the point of view of having a single reference system which is relative to the acquisition of the images and to the movement of the robot (3) and of grasping head (19), however is less preferable from the point of view of possible vibrations which are induced on the acquisition device (4) and of possible impacts with the final end (16) of the winding.
The solution that provides the use of two acquisition devices (4) advantageously allows to operate in an independent way on the two storage stations (5, 6) operating in a parallel way the acquisition and identification operations of the respective final ends (16) of the windings which are present on the first storage station (5) and on the second storage station (6). In this way one eliminates the possible need to wait that the acquisition and identification operations of the final end (16) of a winding are ended before begin the acquisition and identification operations of the final end (16) of the other winding. This results, therefore, in a greater efficiency of the system as a whole.
The acquisition device (4) will be preferably placed in a way (Fig. 25) that the generated laser beam (18) lays on a plane radially developing with respect to the center of the central pin (36) of the support (7, 8), namely essentially radially with respect to the axis of the cylinder which approximates the winding on which the acquisition has to be performed, except for positioning tolerances due to the fact that the internal diameter of the winding is greater than the external diameter of the central pin (36) of the support (7, 8). The preferred radial direction among the possible ones will then be the one which allows to frame also the grasping zone of the final end (16) of the winding as it will be explained more in detail in the following of the present description. Finally the installation distance of the acquisition device (4) will depend on the specific features of the selected device, as measuring field, resolution, precision, interferences in the bundle of the laser beam, etc.

The acquisition phase carried out by the acquisition device (4) will preferably occur maintaining the acquisition device (4) fixed and rotating the winding (10) by rotation means of the corresponding first support (7) of the winding. Therefore the sampling will occur according to the angular rotation of the winding. The number of acquisitions which is carried out can be selected on the basis of the characteristics of the acquisition device (4), characteristics of the winding, of the wound metallic material, of the resolution in the angular measure, of the dimension in section of the bar, for example on the basis of the diameter for circular bars. In general it would be preferable to have a very dense sampling, of the order of an acquisition for each angular rotational degree of the winding, but it will be evident that a greater or lower number of acquisitions can be performed for each rotational degree. For example, with reference to the wound metallic material, some section sizes of the bar and possibly some types of materials can have different characteristics of the final end (16), as for example essentially rectilinear final ends (16) and protruding a lot with respect to the winding, or final ends (16) comprising a considerable twisting and deviation from the essentially rectilinear condition of the end, or final ends (16) little protrusive with respect to the winding or also partially inserted in the winding itself. It will be evident that in the case in which the section sizes of the bar and/or the metallic material are known as having characteristics such that the final end (16) is protruding in an essentially rectilinear way and protruding a lot with respect to the winding, a lower number of acquisitions for angular degree can be sufficient, speeding up the identification process as a whole. For example the final end (16) can protrude with respect to the winding of a quantity of the order of 10 centimeters. A fast acquisition phase can also be provided in which the number of acquisitions is considerably reduced and, if the obtained result does not allow the identification of final end (16) with a reasonable certainty degree, one will proceed with a most dense acquisition phase, namely with the acquisition of a greater number of samples for each angular degree. By way of example in some types of materials, for example in the case of brass windings, the final end (16) is usually exposed in a good way with respect to the winding. In the case of steel windings, instead, the final end (16) has not repetitive characteristics relatively to positioning and protrusion with respect to the winding and all the previously illustrated conditions can occur.
Preferably the acquisition will occur along all the circumferential development of the winding (10).

The acquisition phase, as explained, will take place rotating the winding (10) by means of rotation means of the corresponding first support (7) of the winding. Already in the normal and known used process, the windings (10) are placed on the corresponding support (7, 8) always according to the same winding direction. This positioning is necessary in order to be able to ensure that the exit of the bar from the winding which is going to feed the corresponding processing line (12, 13) occurs in a tangent way with respect to the cylinder which approximates the winding (10) and always with the same unwinding direction of the coil. As a result the circumferential direction according to the which the bar starts starting from the final end (16) is known, which, for the first processing line (12), for example, in the illustrated embodiment, starts from the final end (16) in a counter-clockwise direction, which corresponds to a condition in which the winding has been made according to a clockwise direction. In a corresponding way, the unwinding of the coil will have to be performed according to a clockwise direction. It will be however obvious that the invention is applicable independently from the indicated directions, the modifications to be taken into account being obvious. In the illustrated embodiment, therefore, always with reference to the first processing line (12), once the final end (16) insertion in the processing line itself has been completed, the second support (8) of the winding will rotate in a clockwise direction to facilitate the introduction of the bar into the production line.
The detection method of the final end of a winding according to the present invention, therefore, will have as known data the winding direction of the coil with respect to the rotation direction of the corresponding support of the winding and the characteristics of the profile which constitutes the wound bar, namely its shape, for example circular, elliptic, quadrangular, square, hexagonal, etc. and also its size, for example the diameter for a circular bar, the side for a quadrangular shape, etc. It is necessary to observe, as it will be explained in the following of the present description, that both the shape in section and the size of the bar are known with a high degree of accuracy, of the order of the hundredth.
Though in the illustrated embodiment the support of the winding (10) on which it is present the winding (10) which should be successively introduced in the corresponding processing line (12, 13), is rotated according to a rotation direction corresponding to the direction of the winding, namely in the clockwise direction if the winding is placed on the support in such a way that it appears as having a clockwise development, it will be evident, in view of the following description, that the rotation can be performed also in the opposite direction. The preferred solution of the present invention provides for the rotation direction of the acquisition phase to be concordant with the one relative to the winding of the coil, which presents operative advantages due to the fact that, in the case in which a protruding final end (16) is present, it is identified in an easier way by means of a comparison between two successive acquisitions and in the immediately successive acquisitions the path of the bar is identified starting from its final ends (16) until it enters into the winding. In the opposite case, instead, first the exit of the bar from the winding would be "seen" and finally the identification of position of the final ends (16) would occur.
In general, therefore, in the acquisition phase the support of the winding (10) on which it is present the winding (10) which should be successively introduced in the corresponding processing line (12, 13), is rotated according to a rotation direction which can be concordant or opposite with respect to the direction of the winding, preferably according to a concordant direction.
Absolutely similar considerations can be made in the case of storage stations (5) with horizontal axis or with inclined axis, a detailed description of which is omitted in order not to make the present description excessively boring, the corresponding adaptations being obvious.

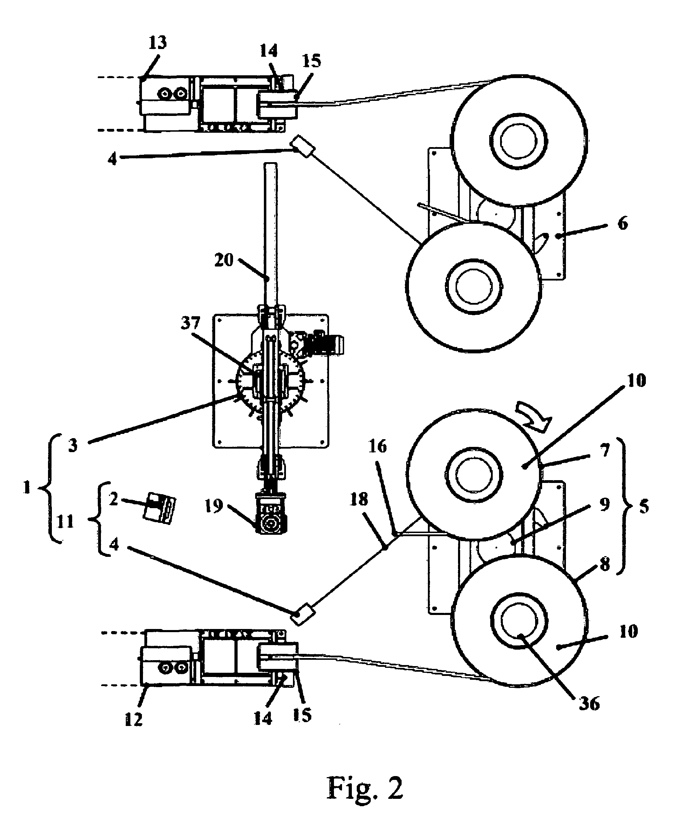

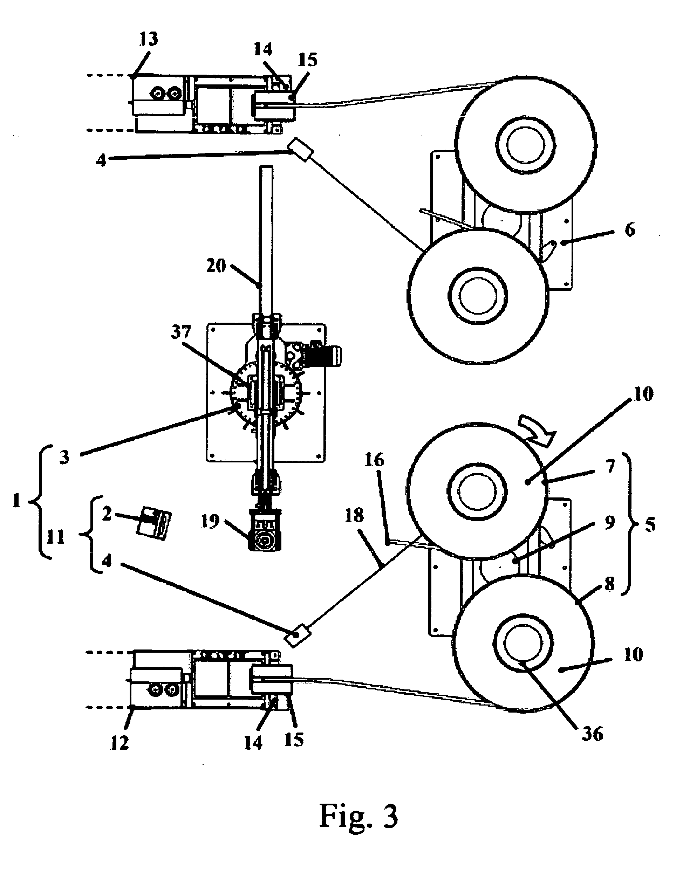

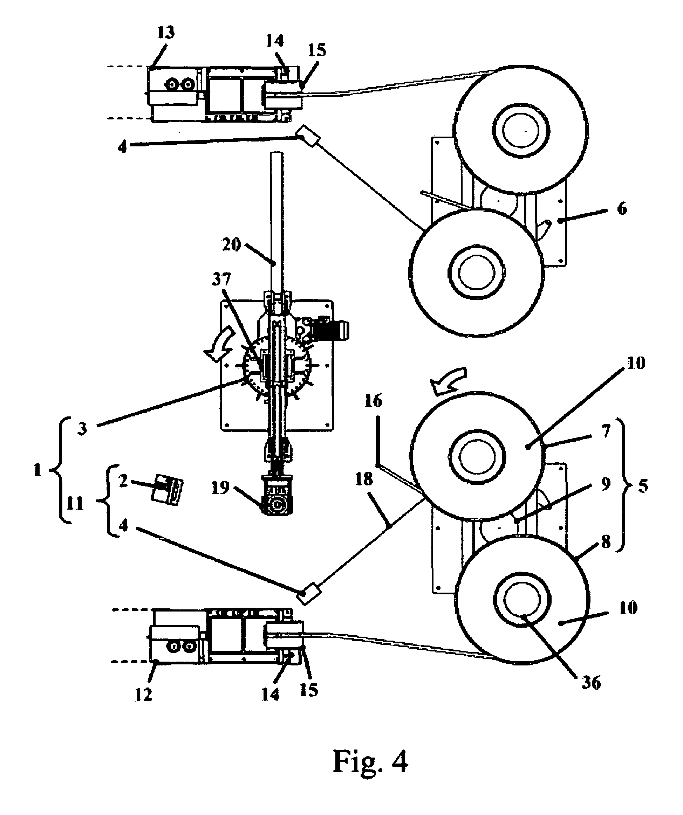

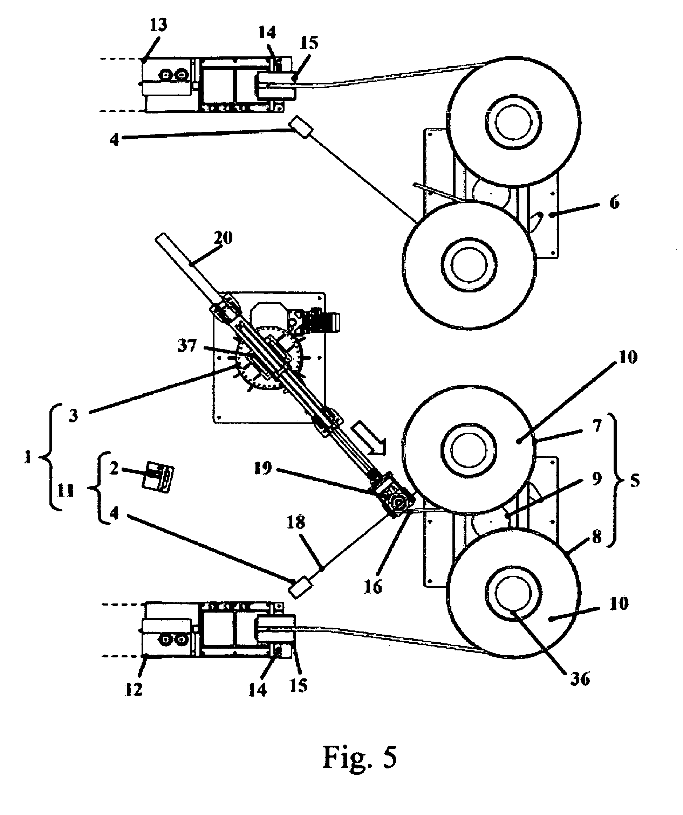

In the illustrated embodiment (Fig. 1), the acquisition phase occurs by means of the rotation of the first support (7) according to a clockwise direction rotation. At the beginning the profile of the winding will be acquired according to the different rotational angles (Fig. 1), until (Fig. 2) the final end (16) of the winding (10) enters into the measuring field of the acquisition device, namely until the laser beam (18) intercepts the final end (16) of the winding (10). Successively (Fig. 3) together with the profile of the winding (10) the development of the final end (16) is also acquired until it (Fig. 4) joins the winding itself, forming a turn of the same. As previously observed, the acquisition phase preferably occurs along all the circumferential development of the winding. In less preferred solutions of the present invention, however, it will be also possible to provide acquisitions only on a portion of the circumferential development of the winding.
Once the identification phase of the end (16) of the winding has been completed, which will be described in detail in the following of the present description, the first support (7) is rotated to bring the final end (16) in a corresponding preferred zone for the grasping by means of the grasping head (19) of the robot (3). In this phase the first support (7) of the winding can be indifferently rotated in a clockwise or counter-clockwise direction according to the position of the final end (16) with respect to the preferred zone for the grasping. At this moment (Fig. 5) the robot (3) is moved to bring the grasping head (19) at the preferred zone for the grasping. In the preferred embodiment of the present invention the preferred zone for the grasping is in a zone in which at least one portion of the bar close to the final end (16) is located inside the laser beam (18) of the acquisition device (4). Even more preferably the grasping head (19) is provided with a protruding end which can be individuated by the acquisition device (4) so that the grasping operation can be driven on the basis of the detected reciprocal position of the final end (16) and of the grasping head (19). In this way, "looking" the protruding end of the grasping head (19) and the final end (16) the grasping operation is performed.
Advantageously, as it will be underlined in the following of the present description, in addition to the position final end (16), the detection method of the final end of a winding according to the present invention also provides the evaluation of the path of the bar between the final end (16) and the point in which the bar which begins in correspondence with said final end (16) joins the winding (10) which is present on the first support (7). This allows to minimize the deformations induced on the path of the end of the bar protruding with respect to the winding when the clamping of the grasping head (19) occurs, which occurs by means of a vice (23) mechanism which performs the clamping of the bar according to a clamping axis (43). Advantageously, then, the grasping operation can occur by disposing and orienting (figs. 6, 7) the grasping head (19) of the robot (3) according to a direction such that the clamping axis (43) is orthogonal with respect to the path of the bar in correspondence of the grasping point itself. This allows to minimize the deformations induced on the path of the end of the bar protruding with respect to the winding when the clamping of the grasping head (19) occurs, which occurs by means of a vice (23) mechanism which performs the clamping of the bar.
Moreover, advantageously, as soon as the path of the bar between the final end (16) and the joining point with the winding (10) is known, the detection method of the final end of a winding according to the present invention also allows to carry out the grasping at a grasping distance (p) in a repetitive way and according to the distance which is needed to ensure the pulling (Fig. 9) of the bar by the puller (14) which is present in correspondence of the introduction guide (15) of the bar itself. Indeed to ensure that the introduction of the final end (16) in the corresponding processing line (12, 13) occurs in a successful way, the grasping of the bar by the robot (3) must occur at a certain grasping distance (p) with respect to the final end (16) of the winding (10). If this grasping distance (p) is excessive the introduction operation in the in the corresponding processing line (12, 13) can fail because the exceeding portion with respect to the correct grasping distance (p) could be such as to give rise to interference conditions with the introduction guide (15). Also in the case in which the grasping distance (p) is lower than the necessary one, the introduction operation in the corresponding processing line (12, 13) because the final end (16) could exit from the introduction guide (15) once the robot (3) releases the bar, or the puller unit (14) could not to be able to engage the bar to drive it towards the corresponding processing line (12, 13).
Even more advantageously, the detection method of the final end of a winding according to the present invention also allows to carry out a further identification phase of the path of the bar between the final end (16) along the portion corresponding to the grasping distance (p) in order to be able to detect and take into consideration also the possible deformations which occurred during the grasping operation itself, namely due to the action of the vice (23) mechanism which performs the clamping of the bar. This phase provides the coordinated movement of the robot (3) and of the corresponding grasping head (19) together with the rotation of the first support (7) in order to move (Fig. 7) inside the laser beam (18) the bar portion protruding with respect to the grasping head (19) and comprising the final end (16). In this way one can evaluate and identify again the path of the bar between the final end (16) along the portion corresponding to the grasping distance (p) and possible errors are minimized in the introduction phase of the bar in the guide (15) due to possible successive deformations which occurred due to the action of the vice (23) mechanism which performs the clamping of the bar.
When the winding (10) which is located on the second support (8) has been completely introduced in the corresponding processing line (12, 13), then the introduction of the bar portion protruding with respect to the grasping head (19) in the introduction guide (15) occurs.
This phase (Figs. 8, 9) provides the coordinated movement of the robot (3) and of the corresponding grasping head (19) with the rotation of the first support (7) and rotating base (9) in such a way to:
- bring the bar portion protruding with respect to the grasping head (19) at the introduction guide (15), more specifically above it;
- bring the first support (7) from a first position (Fig. 1) relative to the loading operation of the winding to a second position (Fig. 9) in which the first support (7) feeds the corresponding processing line (12);
- bring the second support (8) from a second position (Fig. 1) in which the second support (8) feeds the corresponding processing line (12) to a first position (Fig. 9) relative to the loading operation of the winding.

This configuration allows to always have a winding ready for the introduction in the processing line and, in the case in which a winding has just been introduced in the processing line, it allows to have at disposal a support of the winding ready to be equipped with a new corresponding winding to be processed.
Though in the present description explicit reference will be made to this configuration, it will be evident that the present invention is applicable also in the case of solutions in which there is a storage station (5) of the windings which is provided with one single support of the winding.
Furthermore it should be noted that while in the figures the storage stations (5) are represented with windings supports having an essentially vertical axis, it will be also evident that the present invention can be immediately applied also in the case of storage stations (5) having horizontal axis or with inclined axis.
Moreover, in the illustrated embodiment, reference will be made to a configuration comprising two processing lines (12, 13), but it will be evident that the present invention is applicable also in the case of a single production line which is served by a storage station (5) of the windings which is provided with a support of the windings both of the single type or of the double type.
In the illustrated embodiment (Fig. 1), a robot (3) serves two processing lines (12, 13). The robot (3), in the illustrated embodiment (Fig. 6) is provided with a movable arm (20) which can be transversely moved with respect to the body (37) of the robot itself. The robot body (37) is rotatable with respect to the fixing base to the ground. In correspondence with one of the two ends of the movable arm (20) there is a grasping head (19) which is orientatable by means of rotation with respect to the movable arm (20) which supports it. The rotation of the grasping head (19) can occur according to two reciprocally orthogonal rotational axes. The combination of the described movements allows to obtain the approaching of the grasping head (19) to the grasping zone of the final end (16) by means of rotation of the body (37) of the robot and by means of the transverse movement of the movable arm (20). Once the grasping position is reached, the combination of the movements of the grasping head (19) allows the orientation of the grasping head (19) with respect to the final end (16) of the winding on which the grasping has to be performed in order to introduce the final end in the successive processing line.
The position of the robot (3) and the size of its movable arm (20) with respect to the position of each of the two groups respectively composed by:
- first processing line (12) and first storage station (5);
- second processing line (13) and second storage station (6);
are such to ensure the positioning of the grasping head (19) in correspondence with the grasping position relative to the first support (7) of the winding of each storage station (5, 6) and in correspondence with an introduction guide (15) of the final end (16) of the winding in a corresponding puller (14) of each processing line (12, 13).
It will be obvious that in place of the represented type of robot, other types of robot can be used without exiting from the domain of the present invention, as for example anthropomorphous robots.
As previously observed, once the winding has been placed on the storage station (5, 6), it is necessary to identify the final end (16) of the winding in order to be able to successively grasp it and introduce it into the entry of the processing line (12, 13).
To perform the identification of the final end (16) of the winding, at least one acquisition device (4) is used which is able to project a laser beam on the surface of the object to be scanned and to detect the profile of the object to be scanned by means of measurements performed on the projection of the laser beam.
For the aims of the present invention, acquisition devices (4) can be used both of the type which is usually known as two dimensional scanning lasers, and of the type which is usually known as triangulation laser.
Without getting the heart of the matter relative to how a scanner laser works, which for the purpose of the present invention is considered as being known, it will be sufficient to underline that a scanning laser or scanner laser is a device which is able to emit a laser impulse and to receive the corresponding signal which is reflected by the hit object. Measuring the interval of the elapsed time and, therefore, the distance between the acquisition device (4) and the detected point and the intensity of the return signal, one is able to reconstruct the surface of the scanned object, in our case, the surface of the winding (10).
Without getting the heart of the matter relative to how a triangulation laser works, which for the purpose of the present invention is considered as being known, it will be sufficient to underline that a triangulation laser is a device able to emit at least one laser blade which lights the object to be scanned, which is detected by a vision system which is located according to a certain angle with respect to the projected laser blade. By means of analysis of the image which is acquired by the vision system, one is able to reconstruct the surface of the scanned object, in our case, the surface of the winding (10).
Regardless of the type of the used acquisition device (4), in the following of the present description, unless differently indicated, acquisition device (4) is in general intended to mean a device able to generate a laser beam (18), to project it on the object to be scanned which in the our case is the surface of the winding (10), to acquire the result of the projection of the laser beam (18) on the object to be scanned and to provide a reconstruction of the surface of the scanned object as resulting from the projection of the laser beam (18) on the surface of the object itself. It will be evident that, according to the type of the used device, the laser beam (18) will be a laser blade or a series of consecutively projected laser beams along a plane of projection: in the following of the present description laser beam (18) will be intended to indifferently indicate one or the other of the solutions, the two solutions being equivalent for the aims of the present invention.
Preferably, for the aims of the present invention, an acquisition device (4) is used of the type which is usually known as two dimensions scanner laser. It will be however evident that the same results can be obtained also with other types of acquisition devices (4), as the above mentioned acquisition devices (4) of the type which is usually known as triangulation laser.
In the illustrated embodiment (Fig.1), a first acquisition device (4) is used for the first storage station (5) and a second acquisition device (4) is used for the second storage station (6). This configuration allows to position and orient in an optimal way each acquisition device (4) with respect to the respective support of the winding which bears the winding on which the scanning has to be performed. It will be however evident that, in a different embodiment, a single can be used which will be oriented depending on the fact that a scanning must be performed on a winding which is located on the first storage station (5) or on the second storage station (6). Alternatively a single acquisition device (4) can be positioned on the robot (3). This solution, though presenting advantages relatively to the point of view of having a single reference system which is relative to the acquisition of the images and to the movement of the robot (3) and of grasping head (19), however is less preferable from the point of view of possible vibrations which are induced on the acquisition device (4) and of possible impacts with the final end (16) of the winding.

The solution that provides the use of two acquisition devices (4) advantageously allows to operate in an independent way on the two storage stations (5, 6) operating in a parallel way the acquisition and identification operations of the respective final ends (16) of the windings which are present on the first storage station (5) and on the second storage station (6). In this way one eliminates the possible need to wait that the acquisition and identification operations of the final end (16) of a winding are ended before begin the acquisition and identification operations of the final end (16) of the other winding. This results, therefore, in a greater efficiency of the system as a whole.
The acquisition device (4) will be preferably placed in a way (Fig. 25) that the generated laser beam (18) lays on a plane radially developing with respect to the center of the central pin (36) of the support (7, 8), namely essentially radially with respect to the axis of the cylinder which approximates the winding on which the acquisition has to be performed, except for positioning tolerances due to the fact that the internal diameter of the winding is greater than the external diameter of the central pin (36) of the support (7, 8). The preferred radial direction among the possible ones will then be the one which allows to frame also the grasping zone of the final end (16) of the winding as it will be explained more in detail in the following of the present description. Finally the installation distance of the acquisition device (4) will depend on the specific features of the selected device, as measuring field, resolution, precision, interferences in the bundle of the laser beam, etc.

The acquisition phase carried out by the acquisition device (4) will preferably occur maintaining the acquisition device (4) fixed and rotating the winding (10) by rotation means of the corresponding first support (7) of the winding. Therefore the sampling will occur according to the angular rotation of the winding. The number of acquisitions which is carried out can be selected on the basis of the characteristics of the acquisition device (4), characteristics of the winding, of the wound metallic material, of the resolution in the angular measure, of the dimension in section of the bar, for example on the basis of the diameter for circular bars. In general it would be preferable to have a very dense sampling, of the order of an acquisition for each angular rotational degree of the winding, but it will be evident that a greater or lower number of acquisitions can be performed for each rotational degree. For example, with reference to the wound metallic material, some section sizes of the bar and possibly some types of materials can have different characteristics of the final end (16), as for example essentially rectilinear final ends (16) and protruding a lot with respect to the winding, or final ends (16) comprising a considerable twisting and deviation from the essentially rectilinear condition of the end, or final ends (16) little protrusive with respect to the winding or also partially inserted in the winding itself. It will be evident that in the case in which the section sizes of the bar and/or the metallic material are known as having characteristics such that the final end (16) is protruding in an essentially rectilinear way and protruding a lot with respect to the winding, a lower number of acquisitions for angular degree can be sufficient, speeding up the identification process as a whole. For example the final end (16) can protrude with respect to the winding of a quantity of the order of 10 centimeters. A fast acquisition phase can also be provided in which the number of acquisitions is considerably reduced and, if the obtained result does not allow the identification of final end (16) with a reasonable certainty degree, one will proceed with a most dense acquisition phase, namely with the acquisition of a greater number of samples for each angular degree. By way of example in some types of materials, for example in the case of brass windings, the final end (16) is usually exposed in a good way with respect to the winding. In the case of steel windings, instead, the final end (16) has not repetitive characteristics relatively to positioning and protrusion with respect to the winding and all the previously illustrated conditions can occur.
Preferably the acquisition will occur along all the circumferential development of the winding (10). The acquisition phase, as explained, will take place rotating the winding (10) by means of rotation means of the corresponding first support (7) of the winding. Already in the normal and known used process, the windings (10) are placed on the corresponding support (7, 8) always according to the same winding direction. This positioning is necessary in order to be able to ensure that the exit of the bar from the winding which is going to feed the corresponding processing line (12, 13) occurs in a tangent way with respect to the cylinder which approximates the winding (10) and always with the same unwinding direction of the coil. As a result the circumferential direction according to the which the bar starts starting from the final end (16) is known, which, for the first processing line (12), for example, in the illustrated embodiment, starts from the final end (16) in a counter-clockwise direction, which corresponds to a condition in which the winding has been made according to a clockwise direction. In a corresponding way, the unwinding of the coil will have to be performed according to a clockwise direction. It will be however obvious that the invention is applicable independently from the indicated directions, the modifications to be taken into account being obvious. In the illustrated embodiment, therefore, always with reference to the first processing line (12), once the final end (16) insertion in the processing line itself has been completed, the second support (8) of the winding will rotate in a clockwise direction to facilitate the introduction of the bar into the production line.

The detection method of the final end of a winding according to the present invention, therefore, will have as known data the winding direction of the coil with respect to the rotation direction of the corresponding support of the winding and the characteristics of the profile which constitutes the wound bar, namely its shape, for example circular, elliptic, quadrangular, square, hexagonal, etc. and also its size, for example the diameter for a circular bar, the side for a quadrangular shape, etc. It is necessary to observe, as it will be explained in the following of the present description, that both the shape in section and the size of the bar are known with a high degree of accuracy, of the order of the hundredth.
Though in the illustrated embodiment the support of the winding (10) on which it is present the winding (10) which should be successively introduced in the corresponding processing line (12, 13), is rotated according to a rotation direction corresponding to the direction of the winding, namely in the clockwise direction if the winding is placed on the support in such a way that it appears as having a clockwise development, it will be evident, in view of the following description, that the rotation can be performed also in the opposite direction. The preferred solution of the present invention provides for the rotation direction of the acquisition phase to be concordant with the one relative to the winding of the coil, which presents operative advantages due to the fact that, in the case in which a protruding final end (16) is present, it is identified in an easier way by means of a comparison between two successive acquisitions and in the immediately successive acquisitions the path of the bar is identified starting from its final ends (16) until it enters into the winding. In the opposite case, instead, first the exit of the bar from the winding would be "seen" and finally the identification of position of the final ends (16) would occur.
In general, therefore, in the acquisition phase the support of the winding (10) on which it is present the winding (10) which should be successively introduced in the corresponding processing line (12, 13), is rotated according to a rotation direction which can be concordant or opposite with respect to the direction of the winding, preferably according to a concordant direction.
Absolutely similar considerations can be made in the case of storage stations (5) with horizontal axis or with inclined axis, a detailed description of which is omitted in order not to make the present description excessively boring, the corresponding adaptations being obvious.
In the illustrated embodiment (Fig. 1), the acquisition phase occurs by means of the rotation of the first support (7) according to a clockwise direction rotation. At the beginning the profile of the winding will be acquired according to the different rotational angles (Fig. 1), until (Fig. 2) the final end (16) of the winding (10) enters into the measuring field of the acquisition device, namely until the laser beam (18) intercepts the final end (16) of the winding (10). Successively (Fig. 3) together with the profile of the winding (10) the development of the final end (16) is also acquired until it (Fig. 4) joins the winding itself, forming a turn of the same. As previously observed, the acquisition phase preferably occurs along all the circumferential development of the winding. In less preferred solutions of the present invention, however, it will be also possible to provide acquisitions only on a portion of the circumferential development of the winding.
Once the identification phase of the end (16) of the winding has been completed, which will be described in detail in the following of the present description, the first support (7) is rotated to bring the final end (16) in a corresponding preferred zone for the grasping by means of the grasping head (19) of the robot (3). In this phase the first support (7) of the winding can be indifferently rotated in a clockwise or counter-clockwise direction according to the position of the final end (16) with respect to the preferred zone for the grasping. At this moment (Fig. 5) the robot (3) is moved to bring the grasping head (19) at the preferred zone for the grasping. In the preferred embodiment of the present invention the preferred zone for the grasping is in a zone in which at least one portion of the bar close to the final end (16) is located inside the laser beam (18) of the acquisition device (4). Even more preferably the grasping head (19) is provided with a protruding end which can be individuated by the acquisition device (4) so that the grasping operation can be driven on the basis of the detected reciprocal position of the final end (16) and of the grasping head (19). In this way, "looking" the protruding end of the grasping head (19) and the final end (16) the grasping operation is performed.
Advantageously, as it will be underlined in the following of the present description, in addition to the position final end (16), the detection method of the final end of a winding according to the present invention also provides the evaluation of the path of the bar between the final end (16) and the point in which the bar which begins in correspondence with said final end (16) joins the winding (10) which is present on the first support (7). This allows to minimize the deformations induced on the path of the end of the bar protruding with respect to the winding when the clamping of the grasping head (19) occurs, which occurs by means of a vice (23) mechanism which performs the clamping of the bar according to a clamping axis (43). Advantageously, then, the grasping operation can occur by disposing and orienting (figs. 6, 7) the grasping head (19) of the robot (3) according to a direction such that the clamping axis (43) is orthogonal with respect to the path of the bar in correspondence of the grasping point itself. This allows to minimize the deformations induced on the path of the end of the bar protruding with respect to the winding when the clamping of the grasping head (19) occurs, which occurs by means of a vice (23) mechanism which performs the clamping of the bar.
Moreover, advantageously, as soon as the path of the bar between the final end (16) and the joining point with the winding (10) is known, the detection method of the final end of a winding according to the present invention also allows to carry out the grasping at a grasping distance (p) in a repetitive way and according to the distance which is needed to ensure the pulling (Fig. 9) of the bar by the puller (14) which is present in correspondence of the introduction guide (15) of the bar itself. Indeed to ensure that the introduction of the final end (16) in the corresponding processing line (12, 13) occurs in a successful way, the grasping of the bar by the robot (3) must occur at a certain grasping distance (p) with respect to the final end (16) of the winding (10). If this grasping distance (p) is excessive the introduction operation in the in the corresponding processing line (12, 13) can fail because the exceeding portion with respect to the correct grasping distance (p) could be such as to give rise to interference conditions with the introduction guide (15). Also in the case in which the grasping distance (p) is lower than the necessary one, the introduction operation in the corresponding processing line (12, 13) because the final end (16) could exit from the introduction guide (15) once the robot (3) releases the bar, or the puller unit (14) could not to be able to engage the bar to drive it towards the corresponding processing line (12, 13).
Even more advantageously, the detection method of the final end of a winding according to the present invention also allows to carry out a further identification phase of the path of the bar between the final end (16) along the portion corresponding to the grasping distance (p) in order to be able to detect and take into consideration also the possible deformations which occurred during the grasping operation itself, namely due to the action of the vice (23) mechanism which performs the clamping of the bar. This phase provides the coordinated movement of the robot (3) and of the corresponding grasping head (19) together with the rotation of the first support (7) in order to move (Fig. 7) inside the laser beam (18) the bar portion protruding with respect to the grasping head (19) and comprising the final end (16). In this way one can evaluate and identify again the path of the bar between the final end (16) along the portion corresponding to the grasping distance (p) and possible errors are minimized in the introduction phase of the bar in the guide (15) due to possible successive deformations which occurred due to the action of the vice (23) mechanism which performs the clamping of the bar.

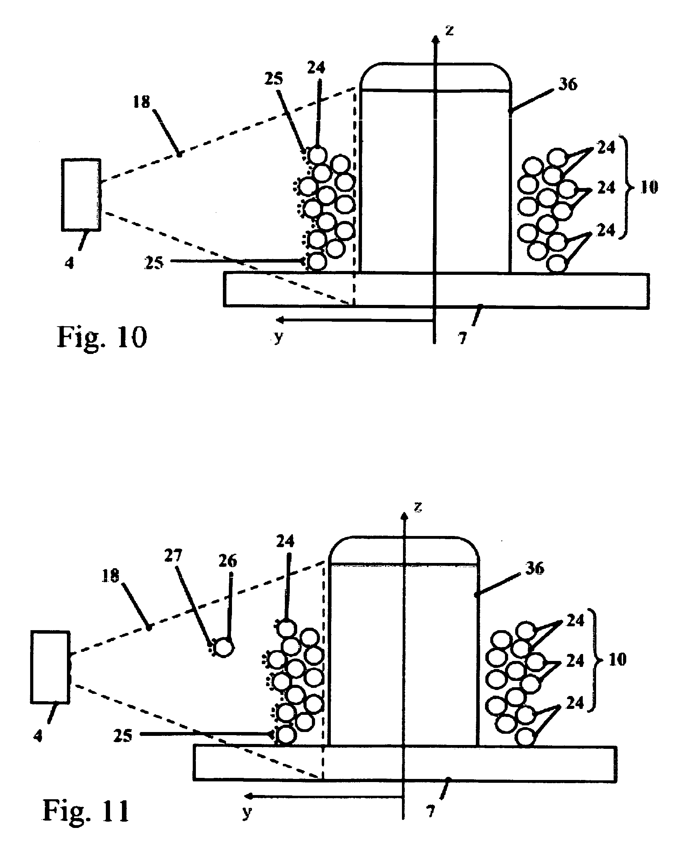

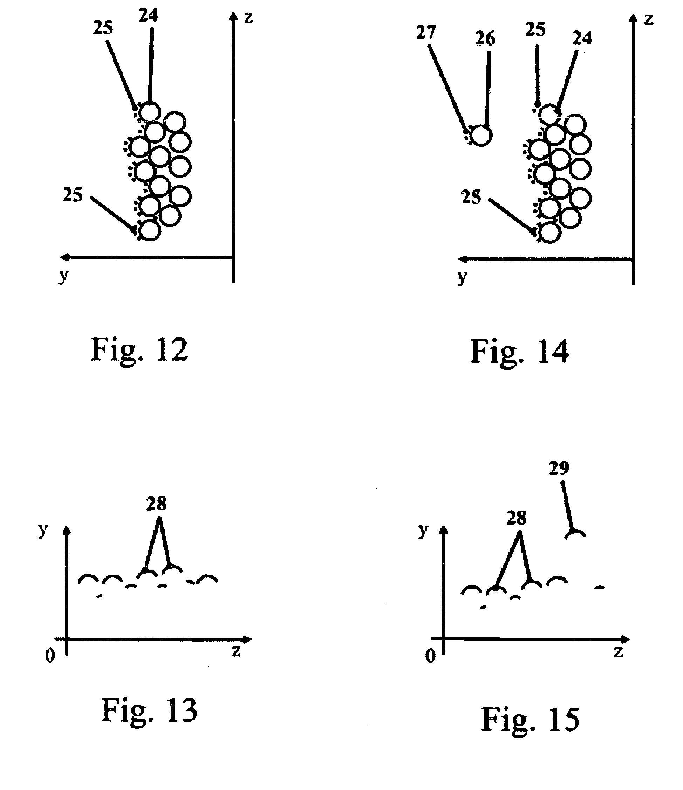

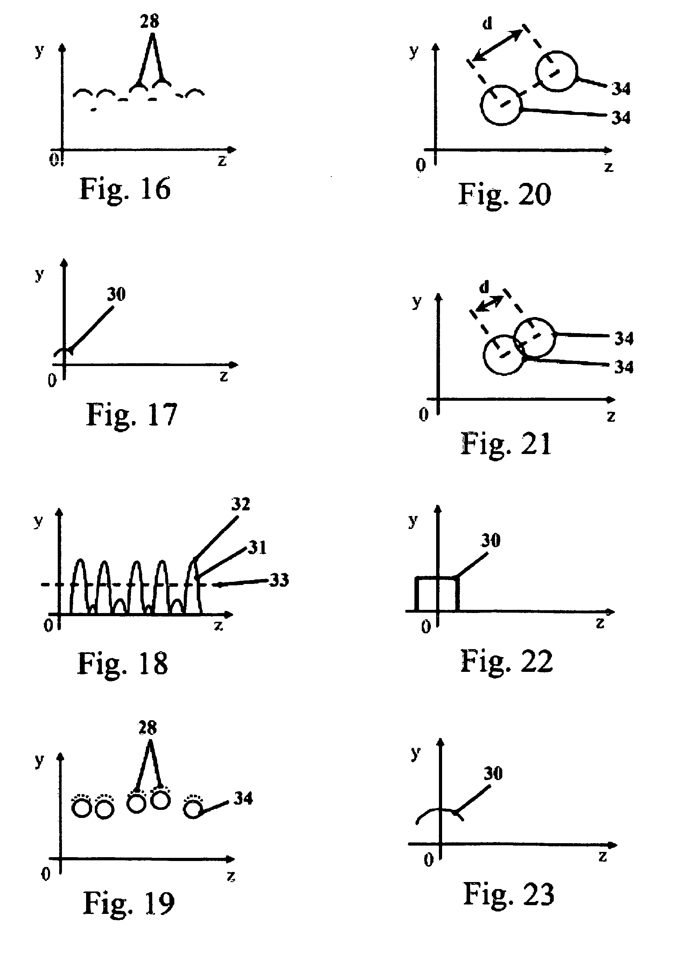

When the winding (10) which is located on the second support (8) has been completely introduced in the corresponding processing line (12, 13), then the introduction of the bar portion protruding with respect to the grasping head (19) in the introduction guide (15) occurs.
This phase (Figs. 8, 9) provides the coordinated movement of the robot (3) and of the corresponding grasping head (19) with the rotation of the first support (7) and rotating base (9) in such a way to:
- bring the bar portion protruding with respect to the grasping head (19) at the introduction guide (15), more specifically above it;
- bring the first support (7) from a first position (Fig. 1) relative to the loading operation of the winding to a second position (Fig. 9) in which the first support (7) feeds the corresponding processing line (12);
- bring the second support (8) from a second position (Fig. 1) in which the second support (8) feeds the corresponding processing line (12) to a first position (Fig. 9) relative to the loading operation of the winding..
In general, the detection method according to the present invention is a detection method of at least one final end (16) of a winding (10) consisting of turns of a metallic material bar which is wound according to a winding direction. The method includes at least the steps of:
i) Projection: projection of a laser beam (18) on the winding (10). The projection of the laser beam (18) occurs on a projection plane which is essentially parallel with respect to the axis of a cylinder approximating the winding (10), but it will be evident that preferably the projection of the laser beam (18) occurs according to an essentially radial direction with respect to said axis of the cylinder approximating the (10), except for positioning tolerances due to the fact that the internal diameter of the winding is greater than the external diameter of the central pin (36) of the support (7, 8) and except for eccentricities of the winding itself. The projected laser beam (18) can be subdivided (Fig. 10) in turn-projected beam portions (25) on the turns (24). Among the projected beam projections it is particularly relevant (Fig. 11) the projection on end-projected beam portion (27) in correspondence with an end (26) which is a protruding end with respect to the winding (10). In general, one cannot guarantee for the protruding end (26) to be the final end (16), because it could happen that also the end initial (17) of the winding is a protruding end with respect to the winding (10).
ii) Acquisition: one acquires a series of images of the laser beam (18) projected on the winding (10). The series of images of the laser beam (18) consists of a sequence of acquisitions in which each acquisition corresponds to a reciprocal angular variation between the projection plane of the laser beam (18) and the winding (10) with respect to the previous acquisition. In general the reciprocal angular variation can be obtained either rotating the acquisition device (4) around the winding (10), or rotating the winding (10) with respect to the acquisition device (4) which is maintained in a fixed position. However the latter solution is the preferred solution of the present invention because each winding (10) is mounted on a rotating support (7, 8) to facilitate the feeding the bar in the corresponding processing line (12, 13) and, therefore, it is most simple to be obtained. It will be apparent, however, that a solution in which the acquisition device (4) is rotated around the winding (10) produces absolutely equivalent results. From each acquisition (Fig. 13) a signal is obtained corresponding to the image (Fig. 12) of the laser beam (18) projected on the turns (24) and which is referred to a reference system (y, z) which is defined on the support (7, 8) of the winding. The signal will be consisting of a series of acquisitions (28) of the projection (25) on the turn (24). Among the acquisitions end-projection acquisition (29) is particularly relevant (Fig. 15), namely the acquisition which is relative to the projection on a end-projected beam portion (27) in correspondence with an end (26) which is a protruding end with respect to the winding (10).
iii) Identification: for at least one part of the series of the acquired images of the laser beam (18), a series of identified turns (34) is generated by means of the identification of at least part of said turns (24) forming the winding (10). The identification occurs on at least one part of the series of the acquired images because some images could be discarded because they are relative to acquisitions having a certain error degree, or one can provide for the identification to use a greater number of acquisitions in the zones in which one presumes or pre-identifies the presence of an end. However it will be apparent that in the more complete embodiment this phase provides the recourse to all the acquired images, possibly also with a certain overlap degree in correspondence of the completion of the rotation on the 360 degrees arc around the winding. The identification occurs by means of application of a correlation algorithm between a signal corresponding to the acquired image of the laser beam (18) and a signal corresponding to a reference profile (30). As it was previously observed the signal corresponding to the acquired image of the laser beam (18) is composed by a series of acquisitions (28, 29) of the projections (25, 27) on the turns (24) or on the protruding end (26), if any. The reference profile (30) is the reference profile corresponding to the shape in section of the turn of the bar according to a section plane parallel to the projection plane as it is seen from the point of view of the laser beam (18). For example the reference profile (30) will be a circumference portion (Fig. 16) for bars having a round section, it will be a square portion or rectangle (Fig. 22) for bars having a quadrangular or square section, it will be an ellipsis portion (Fig. 23) for bars having an elliptic section. The correlation algorithm has as a result a correlation degree for each of the identified turns (34).
iv) Classification: a classification of the identified turns (34) is performed according to geometric constraints relative to a not reciprocal interference condition between adjacent turns. Indeed, as it was previously observed, the section of the turns is known with a high degree of accuracy, and, therefore, it is possible to distinguish in an precise way between conditions in which (Fig. 20) the distance between baricenters (d) and the spatial arrangement of the turns in section (for not-circular turns as quadrangular, elliptic, hexagonal turns) is compatible with the geometric constraints relative to a not reciprocal interference condition in which (Fig. 21) the distance between the baricenters (d) and the spatial arrangement of the turns in section (for not-circular turns as quadrangular, elliptic, hexagonal turns) is not compatible with the geometric constraints relative to a not reciprocal interference condition of two adjacent turns. The classification, therefore, involves for each identified turn (34) the detection of an approximating identified turn (38) which approximates the turn of the bar according to the correlation degree resulting from the application of the correlation algorithm and according to the geometric constraints relative to a not interference condition.
v) Detection: individuated paths (35) are detected. As used herein the term "path" is not referred to a moving object, but it is referred to the static spatial arrangement of the bar, namely to its longitudinal development in the space. Each individuated path (35) corresponds to a representative curve of the sequence of approximating identified turns (38) depending on the reciprocal angular variation between the projection plane and the winding (10). In practice acquisition windows are reciprocally put side by side on a same reference system in which on the ordinate axis the distance is reported (possibly with an offset value) from the base of the first support (7) and on the abscissa axis the rotational angle is reported which separates an acquisition window (39) from the following acquisition window (39). On this reference system it is possible to identify sequences of approximating identified turns (38) in which each sequence identifies an individuated path (35) which in turn corresponds to a turn of the bar. The identification of the individuated path (35) occurs according to interpolation methodologies which for the aim of the present invention are supposed as known, as for example polynomial interpolations, polynomial interpolations which are known as cubic SPLINE, curves of Bezier, spatial interpolation.
vi) Search and locating the final end (16): on the individuated paths (35) a search is performed intended to locate the final end (16) of the winding (10) by means of:
   - locating at least one interrupted individuated path (40, 41), namely one of the individuated paths (35) which includes an interruption point in the development of the path which was individuated according to the reciprocal angular variation between the projection plane and the winding (10). In practice the interpolating lines are searched which are interrupted lines in the representation of the successive acquisitions which are reported depending on the reciprocal rotational angle between the projection plane and the winding (10). One must note that the final end (16) could be located in correspondence with the central zone of the acquisitions with respect to the series of acquisitions, or it could be located in correspondence with an extremity of the acquisition zone, namely in correspondence with rotation angles of 0 degrees or 360 degrees. In this case it will be sufficient to observe that the obtained representation is a cyclic representation with a period of 360 degrees, because the initial and final end of the representation coincide. Possibly to facilitate the detection phase of the final end (16) in correspondence with one of the ends one could provide the joining of the ends or an acquisition along a rotation greater than 360 degrees to obtain a continuous representation also in the extremity region of the acquisition itself. Absolutely similar considerations are present relatively to the end initial (17) and they will not be repeated with reference to it, the analogy being obvious.
   - locating a direction of the final interrupted individuated path (40) having a direction corresponding to the exit direction of the final turn of said winding (10). Indeed due to the fact that the winding direction of the coil (10) is known also the direction relative to the end turn is known, as well as the direction relative to the initial turn. Determining this direction it will therefore be possible to distinguish if the interrupted individuated path (40, 41) is a final interrupted individuated path (40) or an initial interrupted individuated path (41). Absolutely similar considerations are present relatively to the end initial (17) and they will not be repeated with reference to it, the analogy being obvious.

The need to distinguish between a final interrupted individuated path (40) or an initial interrupted individuated path (41) is due to the fact that, contrary to what one could think, for some types of materials or depending on how the winding was prepared or simply on how it was handled during transportation, one cannot be sure that the initial end (17) is internally with respect to the winding, but cases could be present in which also the initial end (17) is a protruding end with respect to the winding. Following this consideration the need is present to identify, among the interrupted individuated path (40, 41), which is actually the one which corresponds to the final end (16), namely the final interrupted individuated path (40). The method can therefore comprise also a further phase vii) relative to searching and locating an initial end (17) of the winding (10), said phase involving searching and locating said initial end (17) by means of:
- locating at least one interrupted individuated path (40, 41), namely one of the individuated paths (35) which includes an interruption point in the development of the individuated path according to the reciprocal angular variation between the projection plane and the winding (10). In practice the interpolating lines are researched which are interrupted lines in the representation of the series of acquisitions which are reported depending on the reciprocal rotation angle between the projection plane and the winding (10) and one can consider as valid the same considerations which were previously made referring to the phase vi) which is relative to the searching and locating phase of the final end (16).
- locating a direction of the initial interrupted individuated path (41) having a direction corresponding to the entry direction of the initial turn of said winding (10). One can consider as valid the same considerations which were previously made referring to the phase vi) which is relative to the searching and locating phase of the final end (16).
Relatively to the correlation algorithm, one should note that its application is less complex in the case of circular cross section bars while it can be most complex in the case of application on bars having a generic section, as for example, bars having an elliptic, quadrangular, square, hexagonal section, etc. In case of the profiles having a generic section, indeed, it is necessary to hold in consideration also the fact that the bar could be subject to twisting along its longitudinal development, giving place to different projections of the laser beam depending on the twisting angle which is present in each projection point. One could think to add an identification phase of the possible twisting of the bar and follow the twisting between an acquisition and the successive one taking into consideration that, once the twisting which is present at one position has been identified, at a point which is a point next to it a twisting will be present which is not very different with respect to the one which was detected at the adjacent point. In this case one could therefore think to apply an identification phase of the twisting by means of application of a correlation algorithm with reference profiles which corresponds to the possible different twisting angles between 0 and 90 degrees or between 0 and 45 degrees according to the particular correlation algorithm which is used.
However according to the aims of the present invention one can use correlation algorithms which present invariance characteristics with respect to the possible twisting of the bar, as for example two-dimensional correlation algorithms or correlation algorithms which are known as "matching" procedures. The latter two solutions will be the preferred embodiments which are used for the aim of the present invention, though other types of correlation algorithms can be used with equivalent or analogous results. It will be apparent that different correlation algorithms can coexist and they can be used in a simultaneous way, the one after another or they can be selected on the basis of the fact that one algorithm provides best results for particular geometries of the bar or for particular materials.
As it was previously observed the final end (16) and/or the initial end (17) could be located in correspondence with a central zone of the acquisitions with respect to the series of acquisitions, or it could be located in correspondence with an extremity of the acquisition zone, namely in correspondence with rotation angles of 0 degrees or 360 degrees of the winding with respect to the acquisition device (4), or vice-versa. In this case it will be sufficient to observe that, if the acquisition is made along all the circumferential development of the winding, the obtained representation is a cyclic representation with a period of 360 degrees, because the initial and final end of the representation coincide. Therefore, in general, preferably, the acquisition phase includes the acquisition of a series of images of the laser beam (18) corresponding to a reciprocal angular variation between the projection plane and the winding (10) along the whole circumferential development of the winding (10).
An additional aspect is relative to the calculation of the previously defined grasping distance (p). Indeed, as it was previously observed, in order to ensure that the introduction of the final end (16) in the corresponding processing line (12, 13) is successful, the grasping of the bar by the robot (3) must occur at a certain grasping distance (p) with respect to the final end (16) of the winding (10). Therefore, in general, the detection method according to the present invention can comprise a further phase viii) relative to the calculation of a grasping distance (p), namely of the distance between the final end (16) of the winding and the point in which grasping means of the final end (16) of the winding (10) are clamped performing the grasping of said final end (16). The calculation of the grasping distance will be carried out on the basis of the individuated path (35) on which the final end (16) is present.

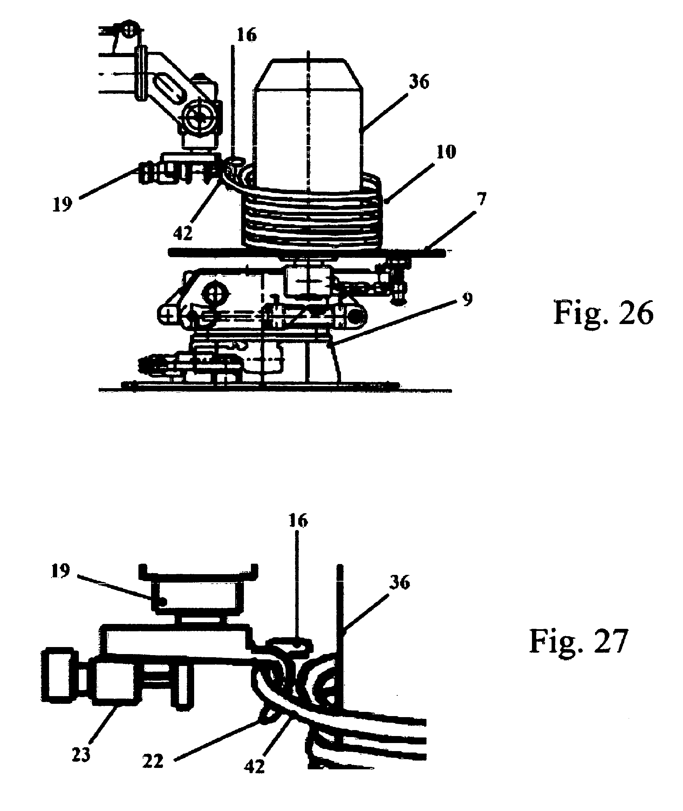

As it was previously observed the detection method of the final end of a winding according to the present invention can also provide the evaluation of the path of the bar between the final end (16) and the point in which the bar which begins in correspondence with said final end (16) joins the winding (10) which is present on the first support (7). Advantageously, then, the grasping operation can occur by disposing and orienting (figs. 6, 7) the grasping head (19) of the robot (3) according to a direction such that the clamping axis (43) is orthogonal with respect to the path of the bar in correspondence of the grasping point itself. This allows to minimize the deformations induced on the path of the end of the bar protruding with respect to the winding when the clamping of the grasping head (19) occurs, which occurs by means of a vice (23) mechanism which performs the clamping of the bar according to the clamping axis (43). In general, therefore, the method according to the present invention can comprise a further phase ix) relative to the calculation of the spatial orientation of said individuated path (35) on which the final end (16) is present, in correspondence the said grasping distance (p). The spatial orientation in correspondence with the grasping distance (p) will define the grasping direction according to which grasping (19, 23) and movement (3) means perform the clamping and the grasping of the bar corresponding to the final end (16).
An additional aspect is relative to (figs. 26, 27) the fact that the final end (16) could does not be sufficiently protruding with respect to the winding (10) or it could be partially inserted into the winding itself. In this case the detection method of the final end of a winding according to the present invention, can also comprise a further phase x) relative to the identification of the possible presence of a loop (42) along the final interrupted individuated path (40), namely the path which is located in correspondence with the final end (16). Loop is intended to mean a deviation of the bar corresponding to the final end (16) of the winding with respect to the winding itself. The loop (42) can thus constitute an insertion zone of a tooth (22) of the grasping head (19) of the robot (3) to allow the traction of the bar in order to expose the final end and carry out in a correct way the grasping operation in an automatic way. This phase is possible because the method according to the present invention in practice allows, due to the phases relative to acquisition, identification, classification and detection of the paths, to carry out a spatial reconstruction of the arrangement of the turns, allowing to identify also the reciprocal distance between the turns, as it was previously described with reference to the classification phase relatively to the verification of not reciprocal interference condition between adjacent turns.
As it was previously observed, the method according to the present invention allows to detect and take into consideration also the possible deformations which occurred during the grasping operation itself, namely due to the action of the vice (23) mechanism which performs the clamping of the bar. This phase provides the coordinated movement of the robot (3) and of the corresponding grasping head (19) together with the rotation of the first support (7) in order to move (Fig. 7) inside the laser beam (18) the bar portion protruding with respect to the grasping head (19) and comprising the final end (16). In this way one can evaluate and identify again the final interrupted individuated path (40) of the bar along the portion corresponding to the grasping distance (p) and possible errors are minimized in the introduction phase of the bar in the guide (15) due to possible successive deformations which occurred due to the action of the vice (23) mechanism which performs the clamping of the bar. In general, therefore, the detection method according to the present invention can comprise a further phase xi) relative to the post-analysis of the final interrupted individuated path (40) of the bar along the portion corresponding to the grasping distance (p) after that the bar corresponding to the final end (16) has been tightened by means of grasping (19, 23) and movement (3) means. The post-analysis phase will occur by means of acquisition of the bar along the portion corresponding to said grasping distance (p), identification of the turn, classification of the identified turn, detection of said final interrupted individuated path (40) according to the above description. In particular the acquisition occurs by means of movement of said portion corresponding to said grasping distance (p) in said projected laser beam (18) by means of the grasping (19, 23) and movement (3) means, possibly cooperating this movement with the rotation of the first support (7).

The present invention is also relative to a detection system (11) of at least one end (16, 17) of a winding (10) of a metallic material bar operating according to the above described detection method. In details the acquisition system includes at least one acquisition device (4) and control means (2).
The acquisition device (4) projects the laser beam (18) on the winding (10), and acquires a series of images of said laser beam (18) which is projected on said winding (10), said series of images of said laser beam (18) consisting of a sequence of acquisitions, each acquisition corresponding to a reciprocal angular variation between said acquisition device (4) and said winding (10) with respect to the previous acquisition.
It will be evident that the acquisition device (4) can also be implemented as a couple of devices one of which projecting the laser beam (18) and one of which acquiring the images of the projected laser beam (18). However due to reasons in relation with the precision of the measure it is preferred when the two devices are integrated into a single acquisition device (4). In general the expression acquisition device (4) is intended to also include the just described solution which comprises two possible different devices to generate the beam and acquire the images.
The control means (2) are intended to carry out the above described phased of the method, that is they are able to carry out at least part of the following operations:
- identifying, on at least one part of the series of the acquired images of said laser beam (18), said series of identified turns (34) by means of the identification of at least part of said turns forming said winding (10), said identification occurring by means of the application of a correlation algorithm between a signal corresponding to said acquired image of said laser beam (18) acquired by means of said acquisition device (4) and a signal corresponding to a reference profile (30), said reference profile (30) being the reference profile corresponding to the shape in section of said turn of said bar according to a section plane parallel to said projection plane, said correlation algorithm having as a result a correlation degree for each of said identified turns (34);
- classifying said identified turns (34) according to geometric constraints relative to a not reciprocal interference condition between adjacent turns, said classification involving for each identified turn (34) the detection of said approximating identified turn (38) which approximates said turn (24) of the bar according to said correlation degree and said geometric constraints relative to a not interference condition;
- detecting said individuated paths (35), each individuated path (40) corresponding to a representative curve of the sequence of approximating identified turns (38) depending on said reciprocal angular variation between said projection plane and said winding (10), each individuated path (35) corresponding to a turn (24) of said bar;
- searching and locating said final end (16) of said winding (10) by means of locating at least said interrupted individuated path (40, 41), said interrupted individuated path (40, 41) comprising an interruption point in the development of said individuated path according to said reciprocal angular variation between said projection plane and said winding (10) and locating a direction of said final interrupted individuated path (40) having a direction corresponding to the exit direction of the final turn of said winding (10);
- searching and locating said initial end (17) of said winding (10), by means of locating at least one interrupted individuated path (40, 41), said interrupted individuated path (40, 41) comprising an interruption point in the development of said individuated path according to said reciprocal angular variation between said projection plane and said winding (10) and by means of locating a direction of said initial interrupted individuated path (41) having a direction corresponding to the entry direction of the initial turn of said winding (10);
- calculating said grasping distance (p), said grasping distance (p) corresponding to the distance between said final end (16) of the winding and the point at which grasping means of the final end (16) of said winding (10) are clamped performing the grasping of said final end (16), said calculation of said grasping distance (p) being carried out along said individuated path (35) on which said final end (16) is present;
- calculating said spatial orientation of said individuated path (35) on which said final end (16) is present, in correspondence with said grasping distance (p), said spatial orientation in correspondence with said grasping distance (p) defining the grasping direction according to which grasping (19, 23) and movement (3) means perform the clamping and the grasping of said bar corresponding to the final end (16);
- searching a loop (42) along said final interrupted individuated path (40), namely a deviation of the bar corresponding to the final end (16) of the winding with respect to the winding itself, said loop (42) having a deviation intended to constitute an insertion zone of a tooth (22) intended for the traction of said bar corresponding to the final end (16) of the winding;
- post-analyzing said final interrupted individuated path (40) of said bar along the portion corresponding to said grasping distance (p) after that said bar corresponding to the final end (16) has been tightened by means of grasping (19, 23) and movement (3) means, said post-analysis phase occurring by means of acquisition of said bar along the portion corresponding to said grasping distance (p), identification of the turn, classification of the identified turn, detection of said final interrupted individuated path (40), said acquisition occurring by means of the movement of said portion corresponding to said grasping distance (p) in said projected laser beam (18) by means of said grasping (19, 23) and movement (3) means.
It will be evident that the control means (2) will cooperate with the rotation control means of the support (7, 8) of the winding (10) on which one wants to carry out the identification of the final end (16) and with corresponding measuring means of the angular rotation of the support (not represented).
As previously explained, the acquisition device (4) can even be a single acquisition device (4) which is used to carry out the identification of the final end (16) on two different storing stations (5, 6). Alternatively the detecting system (11) can include an acquisition device (4) for each of the two different storing stations (5, 6). In a similar way it will be evident that also the control means (2) can be a single control means (2) which is used to carry out the identification of the final end (16) on two different storing stations (5, 6) or different control means (2) can be present for each of the two different storing stations (5, 6).
The control means (2) can be made and can be implemented on elaboration machines as PC, PLC, etc.

The present invention is also relative to a detection and movement system (1) which comprises the previously described detection system (11) and furthermore comprising a robot (3) for grasping and moving the final end (16). The robot (3), as previously described, comprises a grasping head (19) which is moved by means of the robot (3) itself and the grasping head (19) is movable between at least two positions of which:
- a grasping position in which the grasping head (19) carries out the grasping of the bar of the winding (10);
- at least one release position in correspondence with an introduction guide (15) of the final end (16) of the winding (10) of at least one production line (12, 13).
The movement of said grasping head (19) in correspondence with the grasping position is controlled to perform the grasping operation in correspondence with the final interrupted individuated path (40), which was previously described.
Furthermore, in the detection and movement system (1) according to the present invention, the movement of said grasping head (19) in correspondence with the grasping position can be controlled (Fig. 6) to perform the grasping operation in correspondence with the grasping distance (p), which was previously described.
Furthermore, in the detection and movement system (1) according to the present invention, the grasping head (19) is orientatable by means of rotation, the orientation of said grasping head (19) being possible according to at least two reciprocally orthogonal rotational axes. The orientation of the grasping head (19) in correspondence with the grasping position can be controlled to perform the grasping operation in correspondence (Fig. 7) with the grasping distance (p) according to an orthogonal orientation of the clamping axis (43) with respect to the spatial orientation of the individuated path (35) on which the final end (16) is present, in correspondence with said grasping distance (p), as previously explained.
Furthermore, in the detection and movement system (1) according to the present invention, the grasping head (19) can include a tooth (22) intended for the traction of the bar corresponding to the final end (16) of the winding. In this case, the orientation of the grasping head (19) is controlled to perform the traction operation of the bar in correspondence with a possible loop (42) along the final interrupted individuated path (40), for example in the case in which the final end (16) is not sufficiently protruding or it is partially inserted into the winding (10). The orientation of the grasping head (19) will then be controlled to perform (Fig. 27) the insertion of the tooth (22) in the space defined by the deviation of the bar corresponding to the final end (16) of the winding with respect to the winding itself.
Finally one has to observe that the grasping operation can occur both on the base of the acquired data only, that is without detecting the reciprocal position of the grasping head (19) and of the final end (16), and by means of the detection of the reciprocal position of the grasping head (19) and of the final end (16) by means of the acquisition device (4) itself, for example providing one protrusion on the grasping head intended to be individuated by the acquisition device (4) together with the grasping zone in order to guide the grasping operation itself. Such protrusion can even be the tooth (22) which was previously described.

The description of this invention has been made with reference to the enclosed figures showing a preferred embodiment of the invention itself, but it is evident that many alterations, modifications and variations will be apparent to those skilled in the art in light of the foregoing description. Thus, it should be understood that the invention is not limited by the foregoing description, but embraces all such alterations, modifications and variations in accordance with the scope of the appended claims.

### Used nomenclature

With reference to the identification numbers reported in the enclosed figures, the following nomenclature has been used:
1. Detection and movement system
2. Control means
3. Robot
4. Acquisition device or laser scanner
5. First windings storing station
6. Second windings storing station
7. First winding support
8. Second winding support
9. Rotating base
10. Winding or coil
11. Detection system
12. First processing line
13. Second processing line
14. Puller
15. Guide
16. Final end
17. Initial end
18. Laser beam
19. Grasping head
20. Movable arm
21. Grasping distance
22. Tooth
23. Vice
24. Turn
25. Turn-projected beam portion
26. End
27. End-projected beam portion
28. Turn-projection acquisition
29. End-projection acquisition
30. Reference profile
31. Signal
32. Peak
33. Threshold
34. Reconstructed profile or identified turns
35. Individuated path
36. Central pin
37. Robot body
38. Approximating identified turns
39. Acquisition window
40. Final interrupted individuated path
41. Initial interrupted individuated path
42. Loop
43. Clamping axis
a. Rotation angle
d. Distance between baricenters
p. Grasping distance

## Claims

1. Detection method of at least one final end (16) of a winding (10) consisting of turns of a metallic material bar which is wound according to a winding direction, said detection method at least comprising the steps:
i) Projection: projection of a laser beam (18) on said winding (10), said projection of said laser beam (18) occurring on a projection plane which is essentially parallel with respect to the axis of a cylinder approximating said winding (10);
ii) Acquisition: acquisition of a series of images of said laser beam (18) projected on said winding (10), said series of images of said laser beam (18) consisting of a sequence of acquisitions, each acquisition corresponding to a reciprocal angular variation between said projection plane and said winding (10) with respect to the previous acquisition;
iii) Identification: for at least one part of the series of the acquired images of said laser beam (18), generation of a series of identified turns (34) by means of the identification of at least part of said turns forming said winding (10), said identification occurring by means of the application of a correlation algorithm between a signal corresponding to said acquired image of said laser beam (18) and a signal corresponding to a reference profile (30), said reference profile (30) being the reference profile corresponding to the shape in section of said turn of said bar according to a section plane parallel to said projection plane, said correlation algorithm having as a result a correlation degree for each of said identified turns (34);
iv) Classification: classification of said identified turns (34) according to geometric constraints relative to a not reciprocal interference condition between adjacent turns, said classification involving for each identified turn (34) the detection of an approximating identified turn (38) which approximates said turn (24) of the bar according to said correlation degree and said geometric constraints relative to a not interference condition;
v) Detection: detection of individuated paths (35), each individuated path (40) corresponding to a representative curve of the sequence of approximating identified turns (38) depending on said reciprocal angular variation between said projection plane and said winding (10), each individuated path (35) corresponding to a turn (24) of said bar;
vi) Search and locating the final end (16): search and locating the final end of said winding (10) by means of:
- locating at least one interrupted individuated path (40, 41), said interrupted individuated path (40, 41) comprising an interruption point in the development of said individuated path according to said reciprocal angular variation between said projection plane and said winding (10);
- locating a direction of said final interrupted individuated path (40) having a direction corresponding to the exit direction of the final turn of said winding (10).

2. Detection method of at least one final end (16) of a winding (10) of a metallic material bar according to the previous claim **characterised in that** said projection of said laser beam (18) occurs according to an essentially radial direction with respect to said axis of said cylinder approximating said winding (10).

3. Detection method of at least one final end (16) of a winding (10) of a metallic material bar according to any of the previous claims 1 to 2, **characterised in that** it includes a further phase vii) relative to searching and locating an initial end (17) of said winding (10), said phase involving searching and locating said initial end (17) by means of:
- locating at least one interrupted individuated path, said interrupted individuated path comprising an interruption point in the development of said individuated path according to said reciprocal angular variation between said projection plane and said winding (10);
- locating a direction of said initial interrupted individuated path (41) having a direction corresponding to the entry direction of the initial turn of said winding (10).

4. Detection method of at least one final end (16) of a winding (10) of a metallic material bar according to any of the previous claims 1 to 3, **characterised in that** said correlation algorithm is a 2-dimensional correlation algorithm between said signal corresponding to said acquired image of said laser beam (18) and said signal corresponding to said reference profile (30).

5. Detection method of at least one final end (16) of a winding (10) of a metallic material bar according to any of the previous claims 1 to 4, **characterised in that** said correlation algorithm is a matching algorithm between said signal corresponding to said acquired image of said laser beam (18) and said signal corresponding to said reference profile (30).

6. Detection method of at least one final end (16) of a winding (10) of a metallic material bar according to any of the previous claims 1 to 5, **characterised in that** said acquisition phase includes the acquisition of a series of images of said laser beam (18) corresponding to a reciprocal angular variation between said projection plane and said winding (10) along the whole circumferential development of said winding (10).

7. Detection method of at least one final end (16) of a winding (10) of a metallic material bar according to any of the previous claims 1 to 6 **characterised in that** it includes a further phase viii) relative to the calculation of a grasping distance (p), said grasping distance (p) corresponding to the distance between the final end (16) of the winding and the point at which grasping means of the final end (16) of said winding (10) are clamped performing the grasping of said final end (16), said calculation of said grasping distance (p) being carried out along said individuated path (35) on which said final end (16) is present.

8. Detection method of at least one final end (16) of a winding (10) of a metallic material bar according to the previous claim **characterised in that** it includes a further phase ix) relative to the calculation of the spatial orientation of said individuated path (35) on which said final end (16) is present, in correspondence with said grasping distance (p), said spatial orientation in correspondence with said grasping distance (p) defining the grasping direction according to which grasping (19, 23) and movement (3) means perform the clamping and the grasping of said bar corresponding to the final end (16).

9. Detection method of at least one final end (16) of a winding (10) of a metallic material bar according to any of the previous claims 1 to 8 **characterised in that** it includes a further phase x) relative to the search of a loop (42) along said final interrupted individuated path (40), namely a deviation of the bar corresponding to the final end (16) of the winding with respect to the winding itself, said loop (42) having a deviation intended to constitute an insertion zone of a tooth (22) intended for the traction of said bar corresponding to the final end (16) of the winding.

10. Detection method of at least one final end (16) of a winding (10) of a metallic material bar according to any of the previous claims 1 to 9 **characterised in that** it includes a further phase xi) relative to the post-analysis of said final interrupted individuated path (40) of said bar between said final end (16) along the portion corresponding to said grasping distance (p) after that said bar corresponding to the final end (16) has been tightened by means of grasping (19, 23) and movement (3) means, said post-analysis phase occurring by means of acquisition of said bar along the portion corresponding to said grasping distance (p), identification of the turn, classification of the identified turn, detection of said final interrupted individuated path (40), said acquisition occurring by means of the movement of said portion corresponding to said grasping distance (p) in said projected laser beam (18) by means of said grasping (19, 23) and movement (3) means.

11. Detection system (11) of at least one end (16, 17) of a winding (10) of a metallic material bar operating according to the detection method according to any of the previous claims 1 to 10, **characterised in that** it includes at least one acquisition device (4) projecting said laser beam (18) on said winding (10), and acquiring a series of images of said laser beam (18) which is projected on said winding (10), said series of images of said laser beam (18) consisting of a sequence of acquisitions, each acquisition corresponding to a reciprocal angular variation between said acquisition device (4) and said winding (10) with respect to the previous acquisition and further **characterised in that** it includes control means (2) able to carry out at least part of the following operations:
- identifying, on at least one part of the series of the acquired images of said laser beam (18), said series of identified turns (34) by means of the identification of at least part of said turns forming said winding (10), said identification occurring by means of the application of a correlation algorithm between a signal corresponding to said acquired image of said laser beam (18) acquired by means of said acquisition device (4) and a signal corresponding to a reference profile (30), said reference profile (30) being the reference profile corresponding to the shape in section of said turn of said bar according to a section plane parallel to said projection plane, said correlation algorithm having as a result a correlation degree for each of said identified turns (34);
- classifying said identified turns (34) geometric constraints relative to a not reciprocal interference condition between adjacent turns, said classification involving for each identified turn (34) the detection of said approximating identified turn (38) which approximates said turn (24) of the bar according to said correlation degree and said geometric constraints relative to a not interference condition;
- detecting said individuated paths (35), each individuated path (40) corresponding to a representative curve of the sequence of approximating identified turns (38) depending on said reciprocal angular variation between said projection plane and said winding (10), each individuated path (35) corresponding to a turn (24) of said bar;
- searching and locating said final end (16) of said winding (10) by means of locating at least said interrupted individuated path (40, 41), said interrupted individuated path (40, 41) comprising an interruption point in the development of said individuated path according to said reciprocal angular variation between said projection plane and said winding (10) and locating a direction of said final interrupted individuated path (40) having a direction corresponding to the exit direction of the final turn of said winding (10);
- searching and locating said initial end (17) of said winding (10), by means of locating at least one interrupted individuated path (40, 41), said interrupted individuated path (40, 41) comprising an interruption point in the development of said individuated path according to said reciprocal angular variation between said projection plane and said winding (10) and by means of locating a direction of said initial interrupted individuated path (41) having a direction corresponding to the entry direction of the initial turn of said winding (10);
- calculating said grasping distance (p), said grasping distance (p) corresponding to the distance between said final end (16) of the winding and the point at which grasping means of the final end (16) of said winding (10) are clamped performing the grasping of said final end (16), said calculation of said grasping distance (p) being carried out along said individuated path (35) on which said final end (16) is present;
- calculating said spatial orientation of said individuated path (35) on which said final end (16) is present, in correspondence with said grasping distance (p), said spatial orientation in correspondence with said grasping distance (p) defining the grasping direction according to which grasping (19, 23) and movement (3) means perform the clamping and the grasping of said bar corresponding to the final end (16);
- searching a loop (42) along said final interrupted individuated path (40), namely a deviation of the bar corresponding to the final end (16) of the winding with respect to the winding itself, said loop (42) having a deviation intended to constitute an insertion zone of a tooth (22) intended for the traction of said bar corresponding to the final end (16) of the winding;
- post-analyzing said final interrupted individuated path (40) of said bar along the portion corresponding to said grasping distance (p) after that said bar corresponding to the final end (16) has been tightened by means of grasping (19, 23) and movement (3) means, said post-analysis phase occurring by means of acquisition of said bar along the portion corresponding to said grasping distance (p), identification of the turn, classification of the identified turn, detection of said final interrupted individuated path (40), said acquisition occurring by means of the movement of said portion corresponding to said grasping distance (p) in said projected laser beam (18) by means of said grasping (19, 23) and movement (3) means.

12. Detection and movement system (1) comprising a detection system (11) and a grasping and movement robot (3) of said final end (16), said detection system (11) of at least one end (16, 17) of a winding (10) of a metallic material bar operating according to the detection method according to any of the previous claims 1 to 10, and **characterised in that** it includes at least one acquisition device (4) projecting said laser beam (18) on said winding (10), and acquiring a series of images of said laser beam (18) which is projected on said winding (10), said series of images of said laser beam (18) consisting of a sequence of acquisitions, each acquisition corresponding to a reciprocal angular variation between said acquisition device (4) and said winding (10) with respect to the previous acquisition and further **characterised in that** it includes control means (2) able to carry out at least part of the following operations:
- identifying, on at least one part of the series of the acquired images of said laser beam (18), said series of identified turns (34) by means of the identification of at least part of said turns forming said winding (10), said identification occurring by means of the application of a correlation algorithm between a signal corresponding to said acquired image of said laser beam (18) acquired by means of said acquisition device (4) and a signal corresponding to a reference profile (30), said reference profile (30) being the reference profile corresponding to the shape in section of said turn of said bar according to a section plane parallel to said projection plane, said correlation algorithm having as a result a correlation degree for each of said identified turns (34);
- classifying said identified turns (34) geometric constraints relative to a not reciprocal interference condition between adjacent turns, said classification involving for each identified turn (34) the detection of said approximating identified turn (38) which approximates said turn (24) of the bar according to said correlation degree and said geometric constraints relative to a not interference condition;
- detecting said individuated paths (35), each individuated path (40) corresponding to a representative curve of the sequence of approximating identified turns (38) depending on said reciprocal angular variation between said projection plane and said winding (10), each individuated path (35) corresponding to a turn (24) of said bar;
- searching and locating said final end (16) of said winding (10) by means of locating at least said interrupted individuated path (40, 41), said interrupted individuated path (40, 41) comprising an interruption point in the development of said individuated path according to said reciprocal angular variation between said projection plane and said winding (10) and locating a direction of said final interrupted individuated path (40) having a direction corresponding to the exit direction of the final turn of said winding (10);
- searching and locating said initial end (17) of said winding (10), by means of locating at least one interrupted individuated path (40, 41), said interrupted individuated path (40, 41) comprising an interruption point in the development of said individuated path according to said reciprocal angular variation between said projection plane and said winding (10) and by means of locating a direction of said initial interrupted individuated path (41) having a direction corresponding to the entry direction of the initial turn of said winding (10);
- calculating said grasping distance (p), said grasping distance (p) corresponding to the distance between said final end (16) of the winding and the point at which grasping means of the final end (16) of said winding (10) are clamped performing the grasping of said final end (16), said calculation of said grasping distance (p) being carried out along said individuated path (35) on which said final end (16) is present;
- calculating said spatial orientation of said individuated path (35) on which said final end (16) is present, in correspondence with said grasping distance (p), said spatial orientation in correspondence with said grasping distance (p) defining the grasping direction according to which grasping (19, 23) and movement (3) means perform the clamping and the grasping of said bar corresponding to the final end (16);
- searching a loop (42) along said final interrupted individuated path (40), namely a deviation of the bar corresponding to the final end (16) of the winding with respect to the winding itself, said loop (42) having a deviation intended to constitute an insertion zone of a tooth (22) intended for the traction of said bar corresponding to the final end (16) of the winding;
- post-analyzing said final interrupted individuated path (40) of said bar along the portion corresponding to said grasping distance (p) after that said bar corresponding to the final end (16) has been tightened by means of grasping (19, 23) and movement (3) means, said post-analysis phase occurring by means of acquisition of said bar along the portion corresponding to said grasping distance (p), identification of the turn, classification of the identified turn, detection of said final interrupted individuated path (40), said acquisition occurring by means of the movement of said portion corresponding to said grasping distance (p) in said projected laser beam (18) by means of said grasping (19, 23) and movement (3) means
said robot (3) comprising a grasping head (19) which is moved by means of said robot (3) and said grasping head (19) being movable between at least two positions of which:
- a grasping position in which said grasping head (19) carries out the grasping of said bar of said winding (10);
- at least one release position in correspondence with an introduction guide (15) of the final end (16) of said winding (10) of at least one production line (12, 13);
the movement of said grasping head (19) in correspondence with said grasping position being controlled to perform the grasping operation in correspondence with said final interrupted individuated path (40).

13. Detection and movement system (1) according to the previous claim and according to claim 7 **characterised in that** the movement of said grasping head (19) in correspondence with said grasping position is controlled to perform the grasping operation in correspondence with said grasping distance (p) according to a clamping axis (43).

14. Detection and movement system (1) according to the previous claim and according to claim 8 **characterised in that** said grasping head (19) is orientatable by means of rotation, the orientation of said grasping head (19) being possible according to at least two reciprocally orthogonal rotational axes, the orientation of said grasping head (19) in correspondence with said grasping position being controlled to perform the grasping operation in correspondence with said grasping distance (p) according to an orthogonal orientation of said clamping axis (43) with respect to said spatial orientation of said individuated path (35) on which said final ends (16) is present, in correspondence with said grasping distance (p).

15. Detection and movement system (1) according to the previous claim and according to claim 9 **characterised in that** said grasping head includes a tooth (22) intended for the traction of said bar corresponding to the final end (16) of the winding, the orientation of said grasping head (19) being controlled to perform the traction operation of said bar in correspondence with said loop (42) along said final interrupted individuated path (40), the orientation of said grasping head (19) being controlled for the insertion of said tooth (22) in the space defined by the deviation of the bar corresponding to the final end (16) of the winding with respect to the winding itself.

16. Detection and movement system (1) according to any of the previous claims 12 to 15 **characterised in that** said grasping head (19) is provided with at least one protrusion, the orientation of said grasping head (19) being controlled to perform said grasping operation by means of detection and identification of the reciprocal position of said protrusion and said final interrupted individuated path (40) by means of said acquisition device (4).

## Patentansprüche

1. Erfassungsverfahren für mindestens ein Ende (16) einer Wicklung (10), bestehend aus Windungen eines Stabs aus Metall, die in eine Wickelrichtung gewickelt wird, wobei das Erfassungsverfahren mindestens folgende Phasen aufweist:
i) Projizieren: Projizieren eines Laserstrahls (18) auf die Wicklung (10), wobei das Projizieren des Laserstrahls (18) auf einer Projektionsebene erfolgt, die im wesentlichen parallel zur Achse eines Zylinders ist, die sich der Wicklung (10) annähert:
ii) Bilderfassung: Erfassung einer Reihe von Bildern des Laserstrahls (18), der auf die Wicklung (10) projiziert wird, wobei die Reihe von Bildern des Laserstrahls (18) aus einer Sequenz von Erfassungen bestehen, wobei jede Erfassung einer Veränderung des Winkels zwischen der Projektionsebene und der Wicklung (10) in bezug auf die vorherige entspricht;
iii) Identifizierung: für mindestens einen Teil der Reihe der Bilder des Laserstrahls (18) Erzeugung einer Reihe von identifizierten Windungen (34) mittels Identifizierung von mindestens einem Teil von besagten Windungen, die die Wicklung (10) bilden, wobei die Identifizierung durch ein Korrelationsverfahren zwischen einem Signal, das dem Bild des Laserstrahls (18) entspricht, und einem Signal, das einem Bezugsprofil (30) entspricht, erfolgt, wobei besagtes Bezugsprofil (30) das Bezugsprofil ist, das der Querschnittsform der Windung des Stabs entsprechend einer Querschnittebene parallel zu besagter Projektionsebene entspricht, wobei das Ergebnis des Korrelationsverfahrens ein Korrelationsgrad für jede der identifizierten Windungen (34) ist;
iv) Klassifizierung: Klassifizierung der besagten identifizierten Windungen (34) entsprechend geometrischer Bedingungen der gegenseitigen Nicht-Interferenz zwischen benachbarten Windungen, wobei die Klassifizierung für jede identifizierte Windung (34) die Erkennung einer annähernden identifizierten Windung (38) umfasst, die sich der Windung (24) des Stabs entsprechend besagtem Korrelationsgrad und den geometrischen Bedingungen der Nicht-Interferenz annähert;
v) Erfassung: Erfassung von erkannten Bahnen (35), wobei jede erkannte Bahn (40) einer repräsentativen Kurve der Sequenz des Annäherns identifizierter Windungen (38) entspricht, je nach besagter gegenseitiger Winkelveränderung zwischen der Projektionsebene und der Wicklung (10), wobei jede erkannte Bahn (35) einer Windung (24) des Stabs entspricht;
vi) Suche und Lokalisierung des Endes (16): Suche und Lokalisierung des Endes der Wicklung (10) mittels:
Lokalisierung mindest einer unterbrochenen erkannten Bahn (40, 41), wobei die unterbrochene erkannte Bahn (40, 41) einen Unterbrechungspunkt in der Entwicklung besagter erkannter Bahn entsprechend der Winkelveränderung der besagter Projektionsebene und der Wicklung (10) umfasst:
Lokalisierung einer Richtung der unterbrochenen erkannten Endbahn (40) mit einer Richtung, die der Auslaufrichtung der Endwindung besagter Wicklung (10) entspricht.

2. Erfassungsverfahren für mindestens ein Ende (16) einer Wicklung (10) eines Stabs aus Metall nach dem vorherigen Anspruch, **gekennzeichnet dadurch, dass** das Projizierens des Laserstrahls (18) entsprechend einer im wesentlichen radialen Richtung in bezug auf die Achse von besagtem Zylinder, die sich der Wicklung (10) annähert, erfolgt.

3. Erfassungsverfahren für mindestens ein Ende (16) einer Wicklung (10) eines Stabs aus Metall nach einem beliebigen der vorherigen Patentansprüche 1 bis 2, **gekennzeichnet dadurch, dass** es eine weitere Phase vii) der Suche und Lokalisierung eines Anfangsendes (17) besagter Wicklung (10) umfasst, wobei die Phase der Suche und Lokalisierung des Anfangsendes (17) dient, und zwar mittels:
Lokalisierung mindest einer unterbrochenen erkannten Bahn, wobei die unterbrochene erkannte Bahn einen Unterbrechungspunkt in der Entwicklung besagter erkannter Bahn entsprechend der Winkelveränderung der besagter Projektionsebene und der Wicklung (10) umfasst;;
Lokalisierung einer Richtung der unterbrochenen erkannten Anfangsbahn (41) mit einer Richtung, die der Einlaufrichtung der Anfangswindung der Wicklung (10) entspricht.

4. Erfassungsverfahren für mindestens ein Ende (16) einer Wicklung (10) eines Stabs aus Metall nach einem beliebigen der vorherigen Patentansprüche 1 bis 3, **gekennzeichnet dadurch, dass** besagtes Korrelationsverfahren ein zweidimensionales Korrelationsverfahren zwischen dem Signal, das dem Bild des Laserstrahls (18) entspricht, und dem Signal, das dem Bezugsprofil (30) entspricht, ist.

5. Erfassungsverfahren für mindestens ein Ende (16) einer Wicklung (10) eines Stabs aus Metall nach einem beliebigen der vorherigen Patentansprüche 1 bis 4, **gekennzeichnet dadurch, dass** besagtes Korrelationsverfahren ein Matching-Algorithmus zwischen dem Signal, das dem Bild des Laserstrahls (18) entspricht, und dem Signal, das dem Bezugsprofil (30) entspricht, ist.

6. Erfassungsverfahren für mindestens ein Ende (16) einer Wicklung (10) eines Stabs aus Metall nach einem beliebigen der vorherigen Patentansprüche 1 bis 5, **gekennzeichnet dadurch, dass** besagte Erfassungsphase die Erfassung einer Reihe von Bildern des Laserstrahls (18) umfasst, entsprechend einer Winkelveränderung zwischen Projektionsebene und Wicklung (10) entlang des gesamten Umfangs der Wicklung (10).

7. Erfassungsverfahren für mindestens ein Ende (16) einer Wicklung (10) eines Stabs aus Metall nach einem beliebigen der vorherigen Patentansprüche 1 bis 6, **gekennzeichnet dadurch, dass** es eine weitere Phase viii) zur Berechnung eines Greifabstandes (p) umfasst, wobei der Greifabstand (p) dem Abstand zwischen dem Ende (16) der Wicklung und dem Punkt entspricht, an dem Greifmittel des Endes (16) der Wicklung (10) geklemmt werden, um das Ende (16) zu greifen, wobei die Berechnung des Greifabstandes (p) entlang besagter erkannter Bahn (35) durchgeführt wird, auf der besagtes Ende (16) sich befindet.

8. Erfassungsverfahren für mindestens ein Ende (16) einer Wicklung (10) eines Stabs aus Metall nach dem vorherigen Anspruch, **gekennzeichnet dadurch dass** es eine weitere Phase ix) zur Berechnung der räumlichen Ausrichtung besagter erkannter Bahn (35) umfasst, auf der besagtes Ende (16) sich befindet, besagtem Greifabstand (p) entsprechend, wobei die räumliche Ausrichtung dem Greifabstand (p) entspricht und die Greifrichtung definiert, entsprechend welcher Greifmittel (19, 23) und Behandlungsmittel (3) das Klemmen und das Greifen des Stabs an dem Ende ausführen (16).

9. Erfassungsverfahren für mindestens ein Ende (18) einer Wicklung (10) eines Stabs aus Metall nach einem beliebigen der vorherigen Patentansprüche 1 bis 8, **gekennzeichnet dadurch, dass** es eine weitere Phase x) zur Suche nach einer Schleife (42) entlang der unterbrochenen erkannten Endbahn (40) umfasst, und zwar eine Abweichung des Stabs von der Wicklung am Ende (16) der Wicklung, wobei die Schleife (42) eine Abweichung aufweist, die einen Einfügungsbereich für einen Zahn (22) bildet, am Ende (16) der Wicklung, um den Stab zu ziehen.

10. Erfassungsverfahren für mindestens ein Ende (16) einer Wicklung (10) eines Stabs aus Metall nach einem beliebigen der vorherigen Patentansprüche 1 bis 9, **gekennzeichnet dadurch, dass** es eine weitere Phase xi) zur Auswertung der erkannten unterbrochenen Endbahn (40) des Stabs zwischen besagtem Ende (16) entlang dem Abschnitt entsprechend besagtem Greifabstand (p) umfasst, nachdem der Stab am Ende (16) mittels Greifmitteln (19, 23) und Behandlungsmitteln (3) festgezogen wurde, wobei die Auswertungsphase mittels Erfassung des Stabs entlang dem Abschnitt entsprechend dem Greifabstand (p) erfolgt, Identifizierung der Windung, Klassifizierung der identifizierten Windung, Ermittlung der erkannten unterbrochenen Endbahn (40), wobei die Erfassung mittels der Bewegung des Abschnitts entsprechend besagtem Greifabstand (p) in dem Laserstrahl (18) mittels besagter Greifmittel (19, 23) und Behandlungsmittel (3) erfolgt.

11. Erfassungssystem (11) für mindestens ein Ende (16, 17) einer Wicklung (10) eines Stabs aus Metall, betrieben entsprechend dem Erfassungsverfahren nach einem beliebigen der vorherigen Patentansprüche 1 bis 10, **gekennzeichnet dadurch, dass** es mindestens eine Erfassungsvorrichtung (4) umfasst, die besagten Laserstrahl (18) auf die Wicklung (10) projiziert, und eine Reihe von Bildern des Laserstrahls (18), der auf die Wicklung (10) projiziert wird, erfasst, wobei die Reihe von Bildern des Laserstrahls (18) aus einer Sequenz von Erfassungen besteht, wobei jede Erfassung einer Winkelveränderung zwischen der Erfassungsvorrichtung (4) und der Wicklung (10) in bezug auf die vorherige Erfassung entspricht, und weiter **gekennzeichnet dadurch, dass** sie Steuermittel (2) umfasst, um mindestens einen Teil der folgenden Operationen durchzuführen:
Identifizierung, für mindestens einen Teil der Reihe der Bilder des Laserstrahls (18), besagter Reihe von identifizierten Windungen (34) mittels der Identifizierung von mindestens einen Teil der Windungen, die besagte Wicklung (10) bilden, wobei die Identifizierung mittels eines Korrelationsverfahrens zwischen einem Signal, das dem Bild des Laserstrahls (18) entspricht, das mittels der Erfassungsvorrichtung (4) erfasst wurde, und einem Signal das einem Bezugsprofil (30) entspricht, erfolgt, wobei das Bezugsprofil (30) jenes Bezugsprofil ist, das der Querschnittsform der Windung des Stabs entsprechend einer Querschnittebene parallel zu besagter Projektionsebene entspricht, wobei das Ergebnis des Korrelationsverfahrens ein Korrelationsgrad für jede der identifizierten Windungen (34) ist;
Klassifizierung der identifizierten Windungen (34) entsprechend geometrischen Bedingungen der Nicht-Interferenz zwischen benachbarten Windungen, wobei die Klassifizierung für jede identifizierte Windung (34) die Erfassung besagter annähernden identifizierten Windung (38) umfasst, die sich an die Windung (24) des Stabs entsprechend besagtem Korrelationsgrad und besagten geometrischen Bedingungen der Nicht-Interferenz annähert;
Erfassung der erkannten Bahnen (35), wobei jede erkannte Bahn (40) einer repräsentativen Kurve der Sequenz sich annähernder identifizierter Windungen (38) entspricht, je nach besagter Winkelveränderung zwischen Projektionsebene und Wicklung (10), wobei jede erkannte Bahn (35) einer Windung (24) des Stabs entspricht;
Suche und Lokalisierung des Endes (16) besagter Wicklung (10) mittels Lokalisierung mindestens der unterbrochenen erkannten Bahn (40, 41), wobei die unterbrochene erkannte Bahn (40, 41) einen Unterbrechungspunkt in der Entwicklung besagter erkannter Bahn entsprechend der Winkelveränderung zwischen Projektionsebene und Wicklung (10) umfasst, und Lokalisierung einer Richtung der erkannten unterbrochenen Endbahn (40), die eine Richtung hat, die der Auslaufrichtung der Endwindung besagter Wicklung (10) entspricht;
Suche und Lokalisierung des Anfangsendes (17) der Wicklung (10), mittels Lokalisierung mindestens einer unterbrochenen erkannten Bahn (40, 41), wobei die unterbrochene erkannte Bahn (40, 41) einen Unterbrechungspunkt in der Entwicklung besagter erkannter Bahn aufweist, der der Winkelveränderung zwischen Projektionsebene und Wicklung (10) entspricht, und mittels Lokalisierung einer Richtung der unterbrochenen erkannten Anfangsbahn (41), die eine Richtung aufweist, die der Einlaufrichtung der Anfangswindung der Wicklung (10) entspricht;
Berechnung des Greifabstandes (p), der dem Abstand zwischen dem Ende (16) der Wicklung und dem Punkt, an dem Greifmittel für das Ende (16) der Wicklung (10) geklemmt werden, um das Ende (16) zu ergreifen, entspricht, wobei die Berechnung des Greifabstandes (p) entlang besagter erkannter Bahn (35) ausgeführt wird, auf der sich das Ende (16) befindet;
Berechnung der räumlichen Ausrichtung der erkannten Bahn (35) auf der sich das Ende (16) befindet, die dem Greifabstand (p) entspricht, wobei die räumliche Ausrichtung, die dem Greifabstand (p) entspricht, die Greifrichtung definiert, in der Greifmittel (19, 23) und Behandlungsmittel (3) das Klemmen und das Greifen des Stabs an dem Ende (16) ausführen;
Suche nach einer Schleife (42) entlang der erkannten unterbrochenen Endbahn (40), und zwar einer Abweichung des Stabs von der Wicklung am Ende (16) der Wicklung, wobei die Schleife (42) eine Abweichung umfasst, die einen Einfügungsbereich für einen Zahn (22) bildet, um den Stab an dem Ende (16) der Wicklung zu ziehen;
Auswertung der erkannten unterbrochenen Endbahn (40) des Stabs entlang dem Abschnitt, der dem Greifabstand (p) entspricht, nachdem der Stab an dem Ende (16) von Greifmitteln (19, 23) und Behandlungsmitteln (3) festgezogen wurde, wobei die Auswertungsphase mittels Erfassung des Stabs entlang dem Abschnitt, der dem Greifabstand (p) entspricht, erfolgt, Identifizierung der Windung, Klassifizierung der identifizierten Windung, Ermittlung der erkannten unterbrochenen Endbahn (40), wobei die Ermittlung mittels der Bewegung des Abschnitts erfolgt, der dem Greifabstand (p) in dem Laserstrahl (18) entspricht, mittels besagter Greifmittel (19, 23) und Behandlungsmittel (3).

12. Erfassungs- und Behandlungssystem (1) mit einem Erfassungssystem (11) und einem Greif- und Behandlungsroboter (3) für das Ende (16), wobei das Erfassungssystem (11) für mindestens ein Ende (16, 17) einer Wicklung (10) eines Stabs aus Metall entsprechend dem Erfassungsverfahren nach einem beliebigen der vorherigen Patentansprüche 1 bis 10 betrieben wird, und **gekennzeichnet dadurch, dass** es mindestens eine Erfassungsvorrichtung (4) umfasst, die den Laserstrahl (18) auf die Wicklung (10) projiziert, und eine Reihe von Bildern des Laserstrahls (18) auf besagter Wicklung (10) erfasst, wobei die Reihe von Bildern des Laserstrahls (18) aus einer Sequenz von Erfassungen besteht, wobei jede Erfassung einer Winkelveränderung zwischen Erfassungsvorrichtung (4) und Wicklung (10) in bezug auf die vorherige Erfassung entspricht, und weiter **gekennzeichnet dadurch, dass** es Steuermittel (2) umfasst, um mindestens einen Teil der folgenden Operationen durchzuführen:
Identifizierung, auf mindestens einem Teil der Reihe der Bilder des Laserstrahls (18), der Reihe von identifizierten Windungen (34) mittels der Identifizierung von mindestens einem Teil der Windungen die die Wicklung (10) bilden, wobei die Identifizierung mittels eines Korrelationsverfahrens zwischen einem Signal, das dem Bild des Laserstrahls (18) entspricht, das mittels besagter Erfassungsvorrichtung (4) erfasst wurde, und einem Signal, das einem Bezugsprofil (30) entspricht, erfolgt, wobei besagtes Bezugsprofil (30) das Bezugsprofil ist, das der Querschnittsform der Windung des Stabs gemäß einer Querschnittebene parallel zu besagter Projektionsebene entspricht, wobei das Ergebnis des Korrelationsverfahrens ein Korrelationsgrad für jede der identifizierten Windungen (34) ist;
Klassifizierung der identifizierten Windungen (34) unter geometrischen Bedingungen der Nicht-Interferenz zwischen benachbarten Windungen, wobei die Klassifizierung für jede identifizierte Windung (34) die Erfassung von besagter annähernden identifizierten Windung (38) umfasst, die sich an die Windung (24) des Stabs entsprechend besagtem Korrelationsgrad und besagten geometrischen Bedingungen der Nicht-Interferenz annähert;
Erfassung der erkannten Bahnen (35), wobei jede erkannte Bahn (40) einer repräsentativen Kurve der Sequenz sich annähernder identifizierter Windungen (38) entspricht, je nach besagter Winkelveränderung zwischen Projektionsebene und Wicklung (10), wobei jede erkannte Bahn (35) einer Windung (24) des Stabs entspricht;
Suche und Lokalisierung des Endes (16) der Wicklung (10) mittels Lokalisierung mindestens der unterbrochenen erkannten Bahn (40, 41), wobei die unterbrochene erkannte Bahn (40, 41) einen Unterbrechungspunkt in der Entwicklung besagter erkannter Bahn aufweist, der besagter Winkelveränderung zwischen Vorsprungebene und Wicklung (10) entspricht, und Lokalisierung einer Richtung der erkannten unterbrochenen Endbahn (40), die eine Richtung aufweist, die der Auslaufrichtung der Endwindung der Wicklung (10) entspricht;
Suche und Lokalisierung des Anfangsendes (17) der Wicklung (10) mittels Lokalisierung mindestens einer unterbrochener erkannter Bahn (40, 41), die einen Unterbrechungspunkt in der Entwicklung besagter erkannter Bahn aufweist, der besagter Winkelveränderung zwischen Projektionsebene und Wicklung (10) entspricht, und mittels Lokalisierung einer Richtung der unterbrochenen erkannten Anfangsbahn (41) mit einer Richtung, die der Einlaufrichtung der Anfangswindung der Wicklung (10) entspricht;
Berechnung des Greifabstandes (p), der dem Abstand zwischen dem Ende (16) der Wicklung und dem Punkt entspricht, an dem Greifmittel des Endes (16) der Wicklung (10) geklemmt werden und so das Ende (16) ergriffen wird, wobei die Berechnung des Greifabstandes (p) entlang besagter erkannter Bahn (35) durchgeführt wird, auf der sich das Ende (16) befindet;
Berechnung der räumlichen Ausrichtung der erkannten Bahn (35), auf der sich das Ende (16) befindet, entsprechend besagtem Greifabstand (p), wobei die räumliche Ausrichtung entsprechend besagtem Greifabstand (p) die Greifrichtung definiert, in der Greifmittel (19, 23) und Behandlungsmittel (3) das Klemmen und das Greifen des Stabs an dem Ende (16) ausführen;
Suche nach einer Schleife, (42) entlang der erkannten unterbrochenen Endbahn (40), und zwar einer Abweichung des Stabs von der Wicklung am Ende (16) der Wicklung entspricht, wobei die Schleife (42) eine Abweichung hat, um einen Einfügungsbereich für einen Zahn (22) zu bilden, um den Stab am Ende (16) der Wicklung zu ziehen;
Auswertung der erkannten unterbrochenen Endbahn (40) des Stabs entlang dem Abschnitt, der dem Greifabstand (p) entspricht, nachdem besagter Stab, der dem Ende (16) entspricht, von Greifmitteln (19, 23) und Behandlungsmitteln (3) festgezogen wurde, wobei die Auswertungsphase mittels Erfassung des Stabs entlang dem Abschnitt, der dem Greifabstand (p) entspricht, erfolgt, Identifizierung der Windung, Klassifizierung der identifizierten Windung, Ermittlung der erkannten unterbrochenen Endbahn (40), wobei die Erfassung mittels der Bewegung des Abschnitts, der dem Greifabstand (p) entspricht, in dem projizierten Laserstrahl (18) durch die Greifmittel (19, 23) und Behandlungsmittel (3) erfolgt,
wobei der Roboter (3) einen Greifkopf (19) umfasst, der mittels des Roboters (3) bewegt wird, und der Greifkopf (19) zwischen mindestens zwei Positionen beweglich ist, davon:
eine Greifposition, in der der Greifkopf (19) besagten Stab der Wicklung (10) ergreift;
mindestens eine Freigabeposition an einer Einlaufführung (15) des Endes (16) der Wicklung (10) mindestens einer Fertigungsstraße (12, 13);
die Bewegung des Greifkopfs (19) in besagter Greifposition wird gesteuert, um das Greifen an der erkannten unterbrochenen Endbahn (40) auszuführen.

13. Erfassungs- und Transportsystem (1) nach dem vorherigen Anspruch und nach Anspruch 7, **gekennzeichnet dadurch, dass** die Bewegung des Greifkopfs (19) in besagter Greifposition gesteuert wird, um das Greifen an besagtem Greifabstand (p) entlang einer Klemmachse (43) auszuführen.

14. Erfassungs- und Transportsystem (1) nach dem vorherigen Anspruch und nach Anspruch 8, **gekennzeichnet dadurch, dass** der Greifkopf (19) mittels Rotation ausrichtbar ist, wobei die Ausrichtung des Greifkopfs (19) in mindestens zwei rechtwinklig zueinander liegenden Rotationsachsen möglich ist, wobei die Ausrichtung des Greifkopfs (19) in besagter Greifposition gesteuert wird, um das Greifen in besagtem Greifabstand (p) entsprechend einer rechtwinkligen Ausrichtung der Klemmachse (43) in bezug auf die räumliche Ausrichtung der erkannten Bahn (35) auszuführen, auf der sich das Ende (16) befindet, dem besagtem Greifabstand (p) entsprechend.

15. Erfassungs- und Transportsystem (1) nach dem vorherigen Anspruch und nach Anspruch 9, **gekennzeichnet dadurch, dass** besagter Greifkopf einen Zahn (22) umfasst, um den Stab, die dem Ende (16) der Wicklung entspricht, zu ziehen, wobei die Ausrichtung des Greifkopfs (19) gesteuert wird, um die Zugoperation des Stabs an besagter Schleife (42) entlang der erkannten unterbrochenen Endbahn (40) auszuführen, wobei die Ausrichtung des Greifkopfs (19) zur Einfügung des Zahns (22) in dem Raum gesteuert wird, definiert durch die Abweichung des Stabs von der Wicklung am Ende (16) der Wicklung.

16. Erfassungs- und Transportsystem (1) nach einem beliebigen der vorherigen Patentansprüche 12 bis 15, **gekennzeichnet dadurch, dass** der Greifkopf (19) mindestens einen Vorsprung aufweist, wobei die Ausrichtung des Greifkopfs (19) gesteuert wird, um das Greifen mittels Erfassung und Identifizierung der Position zueinander des Vorsprungs und der erkannten unterbrochenen Endbahn (40) mittels besagter Erfassungsvorrichtung (4) auszuführen.

## Revendications

1. Méthode de détection d'au moins une extrémité finale (16) d'une bobine (10) composée de spires d'une barre métallique qui est bobinée selon une direction de bobine, ladite méthode de détection comprenant au moins les phases suivantes:
i) Projection: projection d'un faisceau laser (18) sur ladite bobine (10), ladite projection dudit faisceau laser (18) se faisant sur un plan de projection qui est essentiellement parallèle à l'axe d'un cylindre s'approchant de ladite bobine (10);
ii) Acquisition : acquisition d'une série d'images dudit faisceau laser (18) projeté sur ladite bobine (10), ladite série d'images dudit faisceau laser (18) étant composée d'une séquence d'acquisitions, chaque acquisition correspondant à une variation angulaire réciproque entre ledit plan de projection et ladite bobine (10) par rapport à l'acquisition précédente;
iii) Identification : pour au moins une partie de la série des images obtenues dudit faisceau laser (18), production d'une série de spires identifiées (34) au moyen de l'identification d'au moins partie de ladite formation de spires constituant ladite bobine (10), ladite identification se faisant au moyen de l'application d'un algorithme de corrélation entre un signal qui correspond à ladite image obtenue dudit faisceau laser (18) et un signal correspondant à un profil de référence (30), ledit profil de référence (30) étant le profil de référence qui correspond à la forme en section de ladite spire de ladite barre conformément à un plan de section parallèle audit plan de projection, ledit algorithme de corrélation ayant comme résultat un degré de corrélation pour chacune desdites spires identifiées (34);
iv) Classification : classification desdites spires identifiées (34) conformément à des contraintes géométriques sous forme d'une condition d'interférence non réciproque entre spires adjacentes, ladite classification impliquant pour chaque spire identifiée (34) la détection d'une spire identifiée (38) qui s'approche de ladite spire (24) de la barre conformément audit degré de corrélation et auxdites contraintes géométriques, par rapport à une condition sans interférence;
v) Détection : détection de trajectoires repérées (35), chaque trajectoire repérée (40) correspondant à une courbe représentative de la séquence de spires identifiées de rapprochement (38) selon ladite variation angulaire réciproque entre ledit plan de projection et ladite bobine, (10), chaque trajectoire repérée (35) correspondant à une spire (24) de ladite barre ;
vi) Recherche et localisation de l'extrémité finale (16) : recherche et localisation de l'extrémité finale de ladite bobine, (10) en :
- localisant au moins une trajectoire repérée interrompue (40, 41), ladite trajectoire repérée interrompue (40, 41) comprenant un point d'interruption dans le développement de ladite trajectoire repérée conformément à ladite variation angulaire réciproque entre ledit plan de projection et ladite bobine (10) ;
- localisant une direction de ladite trajectoire finale repérée interrompue (40) ayant une direction qui correspond à la direction de sortie de la spire finale de ladite bobine (10).

2. Méthode de détection d'au moins une extrémité finale (16) d'une bobine (10) d'une barre en métal conformément à la revendication précédente **caractérisée en ce que** ladite projection dudit faisceau laser (18) se fait conformément à une direction essentiellement radiale par rapport audit axe dudit cylindre s'approchant de ladite bobine (10).

3. Méthode de détection d'au moins une extrémité finale (16) d'une bobine (10) d'une barre en métal selon l'une quelconque des revendications précédentes 1 à 2, **caractérisée en ce qu'**elle inclut une ultérieure phase vii) pour rechercher et localiser une extrémité initiale (17) de ladite bobine (10), ladite phase impliquant la recherche et la localisation de ladite extrémité initiale (17) en :
- localisant au moins une trajectoire repérée interrompue, ladite trajectoire repérée interrompue comprenant un point d'interruption dans le développement de ladite trajectoire repérée conformément à ladite variation angulaire réciproque entre ledit plan de projection et ladite bobine (10);
- localisant une direction de ladite trajectoire initiale interrompue repérée (41) ayant une direction qui correspond à la direction d'entrée de la spire initiale de ladite bobine (10).

4. Méthode de détection d'au moins une extrémité finale (16) d'une bobine (10) d'une barre en métal selon l'une quelconque des revendications précédentes, 1 à 3, **caractérisée en ce que** ledit algorithme de corrélation est un algorithme de corrélation bidimensionnel entre ledit signal qui correspond à ladite image obtenue dudit faisceau laser (18) et ledit signal qui correspond audit profil de référence (30).

5. Méthode de détection d'au moins une extrémité finale (16) d'une bobine (10) d'une barre en métal selon l'une quelconque des revendications précédentes, 1 à 4, **caractérisée en ce que** ledit algorithme de corrélation est un algorithme d'appariement entre ledit signal qui correspond à ladite image obtenue dudit faisceau laser (18) et ledit signal correspondant audit profil de référence (30).

6. Méthode de détection d'au moins une extrémité finale (16) d'une bobine (10) d'une barre en métal selon l'une quelconque des revendications précédentes, 1 à 5, **caractérisée en ce que** ladite phase d'acquisition inclut l'acquisition d'une série d'images dudit faisceau laser (18) qui correspond à une variation angulaire réciproque entre ledit plan de projection et ladite bobine (10) le long du développement circonférentiel entier de ladite bobine (10).

7. Méthode de détection d'au moins une extrémité finale (16) d'une bobine (10) d'une barre en métal selon l'une quelconque des revendications précédentes, 1 à 6, **caractérisée en ce qu'**elle inclut une ultérieure phase viii) relative au calcul d'une distance de préhension (p), ladite distance de préhension (p) qui correspond à la distance entre l'extrémité finale (16) de la bobine et le point où des moyens de préhension de l'extrémité finale (16) de ladite bobine (10) sont serrés pour accomplir la préhension de ladite extrémité finale (16), ledit calcul de ladite distance de préhension (p) étant réalisé le long de ladite trajectoire repérée (35) sur laquelle se trouve ladite extrémité finale (16).

8. Méthode de détection d'au moins une extrémité finale (16) d'une bobine (10) d'une barre en métal conformément à la revendication précédente, **caractérisée en ce qu'**elle inclut une ultérieure phase ix) relative au calcul de l'orientation spatiale de ladite trajectoire repérée (35) sur laquelle se trouve ladite extrémité finale (16) en correspondance avec ladite distance de préhension (p), ladite orientation spatiale en correspondance avec ladite distance de préhension (p) définissant la direction de préhension conformément à laquelle des moyens de préhension (19, 23) et des moyens de manutention (3) accomplissent le serrage et la préhension de ladite barre qui correspond à l'extrémité finale (16).

9. Méthode de détection d'au moins une extrémité finale (16) d'une bobine (10) d'une barre métallique selon l'une quelconque des revendications précédentes, 1 à 8, **caractérisée en ce qu'**elle inclut une ultérieure phase x) de la recherche d'une boucle (42) le long de ladite trajectoire finale repérée interrompue (40), c'est-à-dire une déviation de la barre - qui correspond à l'extrémité finale (16) de la bobine - par rapport à la bobine, ladite boucle (42) ayant une déviation destinée à constituer une zone d'insertion d'une dent (22) destinée à la traction de ladite barre qui correspond à l'extrémité finale (16) de la bobine.

10. Méthode de détection d'au moins une extrémité finale (16) d'une bobine (10) d'une barre métallique selon l'une quelconque des revendications précédentes, 1 à 9, **caractérisée en ce qu'**elle inclut une phase ultérieure xi) relative à l'analyse postérieure de ladite trajectoire finale repérée interrompue (40) de ladite barre en correspondance avec ladite extrémité finale (16) le long de la partie qui correspond à ladite distance de préhension (p) après que ladite barre qui correspond à l'extrémité finale (16) a été serrée au moyen de moyens de préhension (19, 23) et moyens de manutention (3), ladite phase d'analyse postérieure ayant lieu au moyen de l'acquisition de ladite barre le long de la partie qui correspond à ladite distance de préhension (p), identification de la spire, classification de la spire identifiée, détection de ladite voie finale repérée interrompue (40), ladite acquisition ayant lieu au moyen du mouvement de ladite partie qui correspond à ladite distance de préhension (p) dans ledit faisceau laser projeté (18) au moyen desdits moyens de préhension (19, 23) et moyens de manutention (3).

11. Système de détection (11) d'au moins une extrémité (16, 17) d'une bobine (10) d'une barre métallique, qui fonctionne conformément à la méthode de détection selon l'une quelconque des revendications précédentes, 1 à 10, **caractérisé en ce qu'**il inclut au moins un dispositif d'acquisition (4) projetant ledit faisceau laser (18) sur ladite bobine (10) et acquérant une série d'images dudit faisceau laser (18) qui est projeté sur ladite bobine (10), ladite série d'images dudit faisceau laser (18) étant composée d'une séquence d'acquisitions, chaque acquisition correspondant à une variation angulaire réciproque entre ledit dispositif d'acquisition (4) et ladite bobine (10) par rapport à l'acquisition précédente et en plus **caractérisé en ce qu'**il inclut des moyens de contrôle (2) capables d'accomplir au moins une partie des opérations suivantes :
- identification, sur au moins une partie de la série des images obtenues dudit faisceau laser (18), de ladite série de spires identifiées (34) au moyen de l'identification d'au moins une partie desdites spires qui forment ladite bobine (10), ladite identification ayant lieu au moyen de l'application d'un algorithme de corrélation entre un signal qui correspond à ladite image obtenue dudit faisceau laser (18) obtenue au moyen dudit dispositif d'acquisition (4) et un signal correspondant à un profil de référence (30), ledit profil de référence (30) étant le profil de référence qui correspond à la forme en section de ladite spire de ladite barre conformément à un plan de section parallèle audit plan de projection, ledit algorithme de corrélation ayant comme résultat un degré de corrélation pour chacune desdites spires identifiées (34) ;
- classification desdites spires identifiées (34) conformément à des contraintes géométriques sous forme d'une condition d'interférence non réciproque entre spires adjacentes, ladite classification impliquant pour chaque spire identifiée (34) la détection de ladite spire de rapprochement identifiée (38) qui s'approche de ladite spire (24) de la barre conformément audit degré de corrélation et auxdites contraintes géométriques sous forme d'une condition sans interférence;
- détection desdites trajectoires repérées (35), chaque trajectoire repérée (40) correspondant à une courbe représentative de la séquence de spires identifiées de rapprochement (38) selon ladite variation angulaire réciproque entre ledit plan de projection et ladite bobine (10), chaque voie repérée (35) correspondant à une spire (24) de ladite barre;
- recherche et localisation de ladite extrémité finale (16) de ladite bobine (10) en localisant au moins ladite trajectoire repérée interrompue (40, 41), ladite trajectoire repérée interrompue (40, 41) comprenant un point d'interruption dans le développement de ladite trajectoire repérée conformément à ladite variation angulaire réciproque entre ledit plan de projection et ladite bobine (10), et en localisant une direction do ladite trajectoire finale repérée interrompue (40) ayant une direction qui correspond à la direction de sortie de la spire finale de ladite bobine (10) ;
- recherche et localisation de ladite extrémité initiale (17) de ladite bobine (10) en localisant au moins une trajectoire repérée interrompue (40, 41), ladite trajectoire repérée interrompue (40, 41) comprenant un point d'interruption dans le développement de ladite trajectoire repérée conformément à ladite variation angulaire réciproque entre ledit plan de projection et ladite bobine (10) et en localisant une direction de ladite voie initiale repérée interrompue (41) ayant une direction qui correspond à la direction d'entrée de la spire initiale de ladite bobine (10) ;
- calcul de ladite distance de préhension (p), ladite distance de préhension (p) correspondant à la distance entre ladite extrémité finale (16) de la bobine et le point où des moyens de préhension de l'extrémité finale (16) de ladite bobine (10) sont serrées pour accomplir la préhension de ladite extrémité finale (16), ledit calcul de ladite distance de préhension (p) étant accompli le long de ladite trajectoire repérée (35) sur laquelle se trouve ladite extrémité finale (16) ;
- calcul de ladite orientation spatiale de ladite trajectoire repérée (35) sur laquelle se trouve ladite extrémité finale (16), en correspondance avec ladite distance de préhension (p), ladite orientation spatiale en correspondance avec ladite distance de préhension (p) définissant la direction de préhension conformément à laquelle des moyens de préhension, (19, 23) et des moyens de manutention (3) accomplissent le serrage et la préhension de ladite barre qui correspond à l'extrémité finale (16) ;
- recherche d'une boucle (42) le long de ladite trajectoire finale repérée interrompue (40) c'est-à-dire une déviation de la barre - qui correspond à l'extrémité finale (16) de la bobine
- par rapport à la bobine, ladite boucle (42) ayant une déviation destinée à constituer une zone d'insertion d'une dent (22) destinée à la traction de ladite barre qui correspond à l'extrémité finale (16) de la bobine ;
- analyse postérieure de ladite trajectoire finale repérée interrompue (40) de ladite barre le long de la partie qui correspond à ladite distance de préhension (p) après que ladite barre qui correspond à l'extrémité finale (16) a été serrée par des moyens de préhension (19, 23) et des moyens de manutention (3), ladite phase d'analyse postérieure ayant lieu au moyen de l'acquisition de ladite barre le long de la partie qui correspond à ladite distance de préhension (p), identification de la spire, classification de la spire identifiée, détection de ladite trajectoire finale repérée interrompue (40), ladite acquisition ayant lieu au moyen du mouvement de ladite partie qui correspond à ladite distance de préhension (p) dans ledit faisceau laser projeté (18) au moyen desdits moyens de préhension (19, 23) et des moyens de mouvement (3).

12. Système de détection et de manutention (1) comprenant un système de détection (11) et un robot de préhension et de manutention (3) de ladite extrémité finale (16), ledit système de détection (11) d'au moins une extrémité (16, 17) d'une bobine (10) d'une barre en métal opérant conformément à la méthode de détection selon l'une quelconque des revendications précédentes, 1 à 10, et **caractérisé en ce qu'**elle inclut au moins un dispositif d'acquisition (4) projetant ledit faisceau laser (18) sur ladite bobine (10) et acquérant une série d'images dudit faisceau laser (18) qui est projeté sur ladite bobine (10), ladite série d'images dudit faisceau laser (18) étant composée d'une séquence d'acquisitions, chaque acquisition correspondant à une variation angulaire réciproque entre ledit dispositif d'acquisition (4) et ladite bobine (10) par rapport à l'acquisition précédente et en plus **caractérisé en ce qu'**il inclut des moyens de contrôle (2) en mesure d'accomplir au moins une partie des opérations suivantes :
- identification, sur au moins une partie de la série des images obtenues dudit faisceau laser (18), de ladite série de spires identifiées (34) au moyen de l'identification d'au moins une partie desdites spires qui forment ladite bobine (10), ladite identification ayant lieu au moyen de l'application d'un algorithme de corrélation entre un signal qui correspond à ladite image obtenue dudit faisceau laser (18) obtenue au moyen dudit dispositif d'acquisition (4) et un signal correspondant à un profil de référence (30), ledit profil de référence (30) étant le profil de référence qui correspond à la forme en section de ladite spire de ladite barre conformément à un plan de section parallèle audit plan de projection, ledit algorithme de corrélation ayant comme résultat un degré de corrélation pour chacune desdites spires identifiées (34) ;
- classification desdites spires identifiées (34) selon des contraintes géométriques sous forme d'une condition d'interférence non réciproque entre spires adjacentes, ladite classification impliquant pour chaque spire identifiée (34) la détection de ladite spire identifiée proche (38) qui s'approche de ladite spire (24) de la barre conformément audit degré de corrélation et auxdites contraintes géométriques sous forme d'une condition sans interférence ;
- détection desdites trajectoires repérées (35), chaque trajectoire repérée (40) correspondant à une courbe représentative de la séquence de spires identifiées proches (38) selon ladite variation angulaire réciproque entre ledit plan de projection et ladite bobine (10), chaque trajectoire repérée (35) correspondant à une spire (24) de ladite barre ;
- recherche et localisation de ladite extrémité finale (16) de ladite bobine (10) en localisant au moins ladite trajectoire repérée interrompue (40, 41), ladite trajectoire repérée interrompue (40, 41) comprenant un point d'interruption dans le développement de ladite trajectoire repérée conformément à ladite variation angulaire réciproque entre ledit plan de projection et ladite bobine (10), et en localisant une direction de ladite trajectoire finale repérée interrompue (40) ayant une direction qui correspond à la direction de sortie de la spire finale de ladite bobine (10) ;
- recherche et localisation de ladite extrémité initiale (17) de ladite bobine (10) en localisant au moins une trajectoire repérée interrompue (40, 41), ladite trajectoire repérée interrompue (40, 41) comprenant un point d'interruption dans le développement de ladite trajectoire repérée conformément à ladite variation angulaire réciproque entre ledit plan de projection et ladite bobine (10), et en localisant une direction de ladite trajectoire initiale interrompue repérée (41) ayant une direction qui correspond à la direction d'entrée de la spire initiale de ladite bobine (10) ;
- calcul de ladite distance de préhension (p) qui correspond à la distance entre ladite extrémité finale (16) de la bobine et le point où des moyens de préhension de l'extrémité finale (16) de ladite bobine (10) sont serrées pour accomplir la préhension de ladite extrémité finale (16), ledit calcul de ladite distance de préhension (p) étant réalisé le long de ladite trajectoire repérée (35) sur laquelle se trouve ladite extrémité finale (16) ;
- calcul de ladite orientation spatiale de ladite trajectoire repérée (35) sur laquelle ladite extrémité finale (16) est présente, en correspondance avec ladite distance de préhension (p), ladite orientation spatiale en correspondance avec ladite distance de préhension (p) définissant la direction de préhension conformément à laquelle des moyens de préhension (19, 23) et des moyens de manutention (3) accomplissent le serrage et la préhension de ladite barre qui correspond à l'extrémité finale (16) ;
- recherche d'une boucle (42) le long de ladite trajectoire finale repérée interrompue (40) c'est-à-dire une déviation de la barre - correspondant à l'extrémité finale (16) de la bobine
- par rapport à la bobine, ladite boucle (42) ayant une déviation destinée à constituer une zone d'insertion d'une dent (22) destinée à la traction de ladite barre correspondant à l'extrémité finale (16) de la bobine;
- analyse postérieure de ladite trajectoire finale repérée interrompue (40) de ladite barre le long de la partie qui correspond à ladite distance de préhension (p) après que ladite barre qui correspond à l'extrémité finale (16) a été serrée par des moyens de préhension (19, 23) et des moyens de manutention (3), ladite phase d'analyse postérieure ayant lieu au moyen de l'acquisition de ladite barre le long de la partie qui correspond à ladite distance de préhension (p), identification de la spire, classification de la spire identifiée, détection de ladite trajectoire finale repérée interrompue (40), ladite acquisition ayant lieu au moyen de la manutention de ladite partie qui correspond à ladite distance de préhension (p) dans ledit faisceau laser projeté (18) par lesdits moyens de préhension (19, 23) et les moyens de manutention (3) ;
ledit robot (3) comprenant une tête de préhension (19) qui est déplacée au moyen dudit robot, (3) ladite tête de préhension (19) étant mobile entre au moins deux positions, c'est-à-dire :
- une position de préhension où ladite tête de préhension (19) effectue la préhension de ladite barre de ladite bobine (10);
- au moins une position de déblocage près d'un guide d'introduction (15) de l'extrémité finale (16) de ladite bobine (10) d'au moins une chaîne de production (12, 13) ;
le mouvement de ladite tête de préhension (19) en correspondance avec ladite position de préhension étant contrôlé pour effectuer l'opération de préhension en correspondance avec ladite trajectoire finale repérée interrompue (40).

13. Système de détection et de manutention (1) selon la revendication précédente et selon la revendication 7, **caractérisé en ce que** le mouvement de ladite tête de préhension (19) en correspondance avec ladite position de préhension est contrôlé pour effectuer l'opération de préhension en correspondance avec ladite distance de préhension (p) conformément à un axe de serrage (43).

14. Système de détection et de manutention (1) selon la revendication précédente et selon la revendication 8, **caractérisé en ce que** ladite tête de préhension (19) est orientable par rotation, l'orientation de ladite tête de préhension (19) étant possible selon au moins deux axes de rotation réciproquement orthogonaux, l'orientation de ladite tête de préhension (19) en correspondance avec ladite position de préhension étant contrôlée pour effectuer l'opération de préhension en correspondance avec ladite distance de préhension (p) conformément à une orientation orthogonale dudit axe de serrage (43) par rapport à la dite orientation spatiale de ladite trajectoire repérée (35) sur laquelle se trouve ladite extrémité finale (16), en correspondance avec ladite distance de préhension (p).

15. Système de détection et de manutention (1) selon la revendication précédente et selon la revendication 9, **caractérisé en ce que** ladite tête de préhension inclut une dent (22) destinée à la traction de ladite barre qui correspond à l'extrémité finale (16) de la bobine, l'orientation de ladite tête de préhension (19) étant contrôlée pour effectuer l'opération de traction de ladite barre en correspondance avec ladite boucle (42) le long de ladite trajectoire finale repérée interrompue (40), l'orientation de ladite tête de préhension (18) étant contrôlée pour l'insertion de ladite dent (22) dans l'espace défini par le déplacement de la barre correspondant à l'extrémité finale (16) de la bobine par rapport à la bobine elle-même.

16. Système de détection et de manutention (1) selon l'une quelconque des revendications précédentes, 12 à 15, **caractérisé en ce que** ladite tête de préhension (19) est pourvue d'au moins une saillie, l'orientation de ladite tête de préhension (19) étant contrôlée pour effectuer ladite opération de préhension au moyen de la détection et identification de la position réciproque de ladite saillie et ladite trajectoire finale repérée interrompue (40) au moyen dudit dispositif d'acquisition (4).
